(19) Europäisches Patentamt
European Patent Office
Office européen des brevets

(11) **EP 3 322 581 B1**

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(51) Int Cl.:
***B29C 67/00*** *(2017.01)*     ***C08K 3/36*** *(2006.01)*
***C08L 83/04*** *(2006.01)*     ***C08L 83/14*** *(2006.01)*

(21) Anmeldenummer: **16801759.8**

(22) Anmeldetag: **24.11.2016**

(86) Internationale Anmeldenummer:
**PCT/EP2016/078739**

(87) Internationale Veröffentlichungsnummer:
**WO 2017/089496 (01.06.2017 Gazette 2017/22)**

(54) **HOCHVISKOSE SILICONZUSAMMENSETZUNGEN ZUR HERSTELLUNG ELASTOMERER FORMTEILE MITTELS BALLISTISCHER GENERATIVER VERFAHREN**

HIGHLY VISCOUS SILICONE COMPOSITIONS FOR PRODUCING ELASTOMERIC MOLDED PARTS BY MEANS OF BALLISTIC GENERATIVE METHODS

COMPOSITIONS DE SILICONE HAUTE VISCOSITÉ DESTINÉES À LA FABRICATION DE PIÈCES MOULÉES EN ÉLASTOMÈRE PAR UN PROCÉDÉ DE FABRICATION ADDITIVE BALISTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2015 PCT/EP2015/077854**

(43) Veröffentlichungstag der Anmeldung:
**23.05.2018 Patentblatt 2018/21**

(73) Patentinhaber: **Wacker Chemie AG**
**81737 München (DE)**

(72) Erfinder:
• **ACHENBACH, Frank**
**84359 Simbach (DE)**
• **SELBERTINGER, Ernst**
**84489 Burghausen (DE)**
• **ZICHE, Wolfgang**
**84489 Burghausen (DE)**

(74) Vertreter: **Bitterlich, Bianca et al**
**Wacker Chemie AG**
**Intellectual Property**
**Hanns-Seidel-Platz 4**
**81737 München (DE)**

(56) Entgegenhaltungen:
**EP-A1- 2 100 921**     **WO-A1-2015/107333**

EP 3 322 581 B1

**Beschreibung**

Die Erfindung betrifft hochviskose vernetzbare Siliconkautschukzusammensetzungen, deren erfindungsgemäße Eigenschaften die Herstellung von elastomeren Formkörpern mittels ballistischer generativer Verfahren (3D-Druck) ermöglichen.

Für die Herstellung von elastomeren Formteilen ausgehend von vernetzbaren Siliconkautschukzusammensetzungen stehen zahlreiche Verfahren zur Verfügung. Je nach Konsistenz und Vernetzungsmechanismus der Siliconkautschukzusammensetzung kann die Herstellung von Formteilen z.B. im Spritzguss, im Pressformverfahren, im Extrusionsverfahren, durch Kalandrieren, Vergießen etc. erfolgen. Diesen konventionellen Verfahren ist gemeinsam, dass die Eigenschaften des gebildeten Formteils (Härte, Reißfestigkeit, Dehnbarkeit, Farbe etc.) im Wesentlichen durch die stoffliche Zusammensetzung der vernetzbaren Siliconkautschukzusammensetzung festgelegt sind, wodurch diese Verfahren typischerweise bzgl. der mechanischen, optischen und elektrischen Eigenschaften weitgehend isotrope Siliconformteile liefern. Die Form der auf diese Weise gebildeten Siliconteile wird entweder durch Verwendung spezieller Formen (Spritzgussformen, Pressmoldingformen, Gießformen), innerhalb derer die Vernetzung erfolgt, bestimmt, oder wird durch Extrusionsdüsen, Kalandrierwalzen etc. festgelegt.

Die konventionellen Verarbeitungsverfahren stoßen jedoch zunehmend an ihre Grenzen, wenn Siliconformteile komplexerer Geometrie, unterschiedlicher Materialzusammensetzung und/oder variabler Eigenschaftsprofile benötigt werden. Der allgemeine Trend hin zur Individualisierung und individuellen Anpassung von Gebrauchsartikeln bedingt zudem kleinere Stückzahlen (z.B. Prototypen, individuell angepasste Prothesen etc.), die Notwendigkeit einer raschen Verfügbarkeit und eine einfache Umstellung auf neue Produkt-Serien, wodurch die Effizienz konventioneller Verfahren nicht mehr gegeben ist.

Ein zunehmend an Bedeutung gewinnendes Verfahren zur Herstellung von Formteilen ist das generative Fertigungsverfahren (*Additive Manufacturing;* 3D-Druck Verfahren), welches zahlreiche unterschiedliche Techniken umfasst, denen ein automatisierter additiver Schichtaufbau des Formteils gemeinsam ist (A. Gebhardt, Generative Fertigungsverfahren, Carl Hanser Verlag, München 2013). Das Generative Fertigungsverfahren bietet nicht nur die Möglichkeit, die oben genannten Unzulänglichkeiten der konventionellen Verarbeitungsverfahren zu vermeiden, sondern ermöglicht ein grundlegend neuartiges Design von Formartikeln.

Der additive schichtweise Aufbau des Formteils kann erfolgen, indem eine aufgebrachte Schicht des vernetzbaren Materials ortsselektiv vernetzt wird (z.B. mittels eines Lasers). Ortsselektive Vernetzung bedeutet, dass nur jenes Material der Schicht vernetzt wird, welches den späteren Formartikel bildet; das nichtvernetzte Material wird letztlich entfernt und kann ggf. wiederverwendet werden. Ein additiver schichtweiser Aufbau des Formteils kann jedoch auch dadurch erfolgen, indem das vernetzbare Material ortsselektiv aufgebracht wird (z.B. mittels eines Druckkopfes in Form diskreter Tröpfchen), d.h. nur an jenen Stellen, die Bestandteil des zu bildenden Formkörpers werden. Die auf diese Weise aufgebrachte Schicht wird im Allgemeinen nicht geschlossen sein, sondern unmittelbar einen Querschnitt des gewünschten Formkörpers abbilden. Die ortsselektiv aufgebrachte Masse wird anschließend vernetzt (z.B. durch flächige Bestrahlung) und die nächste Schicht wird ortsselektiv aufgebracht usw. Falls es die Form des zu druckenden Teiles erforderlich macht (z.B. bei überhängenden Strukturen, Hohlräumen etc.), kann zusätzlich zum vernetzbaren Siliconmaterial ein geeignetes Stützmaterial aufgebracht werden, welches nach Beendigung des Druckvorgangs wieder entfernt werden kann. Das ortsselektive Aufbringen der vernetzbaren Masse kann z.B. durch diskontinuierliches (diskretes) Jetten von Tröpfchen (so genannte ballistische Verfahren) oder durch kontinuierliches Dispensen dünner Stränge erfolgen. Grundsätzlich ermöglicht das Jetten im Vergleich zum Dispensen das Drucken feinerer struktureller Details sowie komplexerer Strukturen. Der Vorteil des Dispensens besteht in der Möglichkeit, größere Materialmengen pro Zeiteinheit aufbringen zu können. Zusätzlich ermöglicht das Dispensen auch höherviskose Materialien aufzubringen, so dass es von Vorteil sein kann, beide Techniken dadurch zu kombinieren, indem im 3D-Drucker zusätzlich zu der (oder den) Jetting-Druckdüse(n) auch eine oder ggf. mehrere Dispens-Düsen angebracht werden. Auf diese Weise können z.B. filigrane Teile des Formkörpers mittels der Jetting-Düse aufgebaut werden und größer volumige Teile des Formkörpers durch Dispensen gedruckt werden. Hinsichtlich der rheologischen Anforderungen, welche das Jetten bzw. Dispensen an das zu druckende Material stellen, erweist sich das Jetten als wesentlich anspruchsvoller.

WO2015/107333 A1 beschreibt ein 3D-Druck Verfahren zur Herstellung von Prothesen aus Siliconelastomeren durch (kontinuierliche) Extrusion der vernetzungsfähigen Siliconkautschukzusammensetzung aus einer Mischdüse. Der 3D-Druck wird ggf. unterstützt durch eine zweite Mischdüse zur Extrusion eines thermoplastischen Materials, welches als Stützmaterial für die zu druckende Siliconkautschukzusammensetzung dient. Die Vernetzung der Siliconkautschukzusammensetzung erfolgt durch platinkatalysierte Additionsreaktion bei Raumtemperatur (Hydrosilylierung). Nachteilig an diesem Verfahren ist die für den Druck feiner Details nicht erreichbare, ortsgenaue Platzierung kleinster Mengen der Siliconkautschukzusammensetzung. Des Weiteren lässt sich der Vernetzungszeitpunkt nach dem Vermischen der beiden Kautschukkomponenten nicht mehr beeinflussen, was u.a. den Nachteil hat, dass im Verlauf des Druckvorgangs sehr unterschiedlich stark vernetzte Bereiche der Siliconkautschukzusammensetzung in Kontakt gebracht werden (wenn die Verarbeitungszeit der Kautschukmasse kürzer als die Druckzeit ist) oder dass die Tragfähigkeit der gedruckten Struktur nicht gegeben ist (Verarbeitungszeit länger als Druckzeit).

Eine spezielle Ausführungsform des generativen Fertigungsverfahren stellt das ballistische Verfahren dar, welches sich dadurch auszeichnet, dass das ortsselektive Aufbringen der vernetzbaren Masse mit Hilfe eines Druckkopfes in Form einzelner Tröpfchen (Voxel) erfolgt (*Jetting; Inkjet printing; drop-on-demand printing*). Die aufgebrachte Masse kann nachfolgend z.B. mittels elektromagnetischer Strahlung vernetzt werden, wodurch eine dünne Schicht des Formteils gebildet wird. Dieser Vorgang des schichtweisen Aufbaus wiederholt sich solange, bis der vollständige Formkörper gebildet ist.

Bei den ballistischen Verfahren (Jetting) unterscheidet man grundsätzlich zwischen dem kontinuierlichen inkjet (CIJ) printing und dem drop-on-demand (DOD)inkjet printing. Beide Methoden können Tröpfchen mit Durchmessern von 10 µm bis zu einigen hundert µm erzeugen.

Im CIJ-Verfahren wird ein kontinuierlicher Strom an Tröpfchen erzeugt, indem das Material unter hohem Druck aus einer Düse ausgestoßen wird und der entstehende Flüssigkeitsstrahl infolge Rayleigh Instabilität zu Einzeltröpfchen zerfällt. Die elektrostatisch geladenen Tröpfchen werden mittels elektrischer Ablenkplatten so dirigiert, dass diese entweder ortsgenau auf die Arbeitsebene (Substrat) gelangen oder (falls kein Druck erfolgen soll), in eine Rückflussrinne gelangen, durch welche sie der Wiederverwendung zugeführt werden können. Diese Rückführung des zu druckenden Materials weist im Fall von vernetzbaren Siliconkautschukzusammensetzungen neben dem Kontaminationsrisiko die gravierende Gefahr einer massiven Veränderung der rheologischen Eigenschaften infolge beginnender Vernetzung auf und ist daher nicht praktikabel.

Hingegen werden im DOD-Verfahren nur bei Bedarf Tröpfchen erzeugt, die sämtlich zum Aufbau des Formteils ortsselektiv abgeschieden werden, entweder indem ein Positionierroboter die Jetting-Düse in x,y,z-Richtung exakt positioniert, oder die Arbeitsebene entsprechend in x,y,z-Richtung verfahren wird; prinzipiell lassen sich beide Möglichkeiten auch simultan realisieren.

DE 10 2011 012 412 A1 und DE 10 2011 012 480 A1 beschreiben eine Vorrichtung sowie ein Verfahren zur schrittweisen Herstellung von 3D-Strukturen mit einer Druckkopfanordnung mit wenigstens zwei, vorzugsweise 50 bis 200 Druckkopfdüsen, welche das ortsselektive Aufbringen ggf. mehrerer photovernetzbarer Materialien mit unterschiedlicher Photoempfindlichkeit ermöglicht, wobei die photovernetzbaren Materialien anschließend ortsselektiv durch elektromagnetische Strahlung, insbesondere durch Zweiphotonen- oder Mehrphotonenprozesse im Fokusbereich eines Lasers, verfestigt werden. Das Aufbringen der photovernetzbaren Materialien mittels Inkjetdruck stellt an die Viskosität der photovernetzbaren Materialien spezielle Anforderungen. So zeichnen sich die photovernetzbaren Materialien durch eine Viskosität von weniger als 200 mPa.s, insbesondere weniger als 80 mPa.s, besonders bevorzugt weniger als 40 mPa.s aus. Typische Siliconkautschukzusammensetzungen, insbesondere hochviskose Siliconkautschukzusammensetzungen, weisen jedoch eine um mehrere Größenordnungen höhere Viskosität auf und können daher mit den hier beschriebenen Inkjet-Druckdüsen nicht gejettet werden. Um eine ausreichende Vernetzung des aufgebrachten Materials mittels Zwei- bzw. Mehrphotonenpolymerisation zu erzielen, bedarf es zudem auf die Laserwellenlänge abgestimmter Photoinitiatoren und einer photovernetzbare Gruppen enthaltenden polymeren VernetzerKomponente, wobei die photovernetzbaren Gruppen der Klasse der Acrylate, Methacrylate, Acrylamide, Methylacrylamide, Urethanacrylate, Urethanmethacrylate, Ureaacrylate und Ureamethacrylate angehören. Das beschriebene Verfahren eignet sich jedoch nicht zur Herstellung von Formteilen bestehend aus Siliconelastomeren. Zum einen sind die verwendeten Photoinitiatoren, Photosensitizer, Coinitiatoren etc. in den (unpolaren) Siliconmassen nur schlecht löslich, was zu Trübungen, Mikrophasenseparation und Inhomogenitäten führt. Die radikalische Härtung von mit den voranstehend genannten photovernetzbaren Gruppen funktionalisierten Siliconen weist bekanntermaßen das Problem der durch Sauerstoff verursachten Inhibierung auf, wodurch die Vernetzungsgeschwindigkeit erheblich herabgesetzt wird und klebrige Oberflächen resultieren. Steuert man diesem Effekt durch Erhöhung der Funktionsdichte an z.B. Acrylatgruppen entgegen, resultieren nichtelastische, spröde Vulkanisate. Schließlich setzt die für eine Mehrphotonenpolymerisation (insbesondere bedingt durch die niedrige Funktionsdichte an photopolymerisierbaren Gruppen) benötigte, durch gepulste Femtosekundenlaser erzeugte extrem hohe lokale Photonendichte Zersetzungsreaktionen (Carbonisierung) im Silicon in Gang, was zu inakzeptablen Verfärbungen und Materialschädigungen führt.

Im DOD-Verfahren hängt die Auflösung struktureller Details des zu bildenden Formkörpers vor allem von der Größe der gejetteten Tröpfchen (Voxel) sowie deren ortsgenaue Aufbringung ab. Im Allgemeinen lassen sich mittels kleinerer Tröpfchen feinere strukturelle Details erzeugen. Da die Frequenz, mit welcher der Druckkopf die Tröpfchen erzeugt, begrenzt ist, führt die Verwendung kleinerer Tröpfchen jedoch zwangsläufig zu längeren Herstellungszeiten des Formteiles, so dass im Einzelfall ein Kompromiss zwischen Formgenauigkeit und Herstelldauer getroffen werden muss. Die Größe der Tröpfchen, die in weiten Grenzen durch geeignete Auslegung des Druckkopfes variiert werden kann, hängt jedoch maßgeblich von den rheologischen Eigenschaften der vernetzbaren Masse ab. Generell gilt, dass niedrigviskose Massen das Jetten kleinerer Tröpfchen mit höherer Frequenz erlauben, während höherviskose Massen die gegenwärtig verfügbaren Druckköpfe rasch an ihre Grenze bringen.

Eine genauere Betrachtung des Jetting-Verfahrens zeigt, dass ein befriedigendes Druckbild (also ein formgenaues Elastomerteil) nur dann erhalten wird, wenn die technischen Parameter des Druckkopfes mit den insbesondere rheologischen Eigenschaften des zu druckenden Materials kompatibel sind. Wesentliche technische Parameter des Druckkopfes sind die Druckdifferenz zwischen Materialreservoir und Düsenausgang, der Düsendurchmesser sowie die Zeit, innerhalb derer die gesamte Menge eines Tropfens die Düse verlässt (ejection time). Als Druckköpfe kommen insbesondere (thermische) Bubble-Jet- und Piezo-Druckköpfe in Frage, wobei für den Druck von Elastomerteilen Piezo-Druckköpfe besonders bevorzugt sind, welche auch höherviskose Materialien jetten können. Diese sind kommerziell erhältlich (z.B. Druckköpfe der Firmen "NORDSON CORP./USA" und "VERMES MICRODISPENSING GMBH/Deutschland"). Diese Piezo-Druckköpfe ermöglichen einen Druckaufbau im kbar-Bereich, wodurch Flüssigkeitsmengen im pl- bis nl-Bereich innerhalb von 1-100 $\mu$s durch eine Düse mit Durchmessern zwischen 50 und 500 $\mu$m mit einer Geschwindigkeit von 1-100 m/s ausgestoßen werden können. Dieser Vorgang wiederholt sich mit einer Frequenz von bis zu einigen hundert Hz (dies sind typische Größenbereiche, die im Einzelfall erheblich abweichen können). Neben diesen technischen Parametern der Druckventile erweisen sich die rheologischen Eigenschaften des zu druckenden Materials als entscheidend. Es ist wichtig festzustellen, dass das Material die Düse nicht als fertiger Tropfen verlässt, sondern ein Tropfenbildungsvorgang abläuft. Das Material verlässt die Düse zunächst laminar strahlförmig, wobei sich rasch am Kopfende eine ovale Verdickung (Vorläufer des Haupttropfens) herausbildet, die jedoch noch über einen dünneren Materialfaden mit dem Düsenausgang verbunden bleibt. Nachfolgend sind vielfältige Szenarien möglich. Reißt der Materialfaden am Düsenausgang ab und vereinigt sich nachfolgend mit dem Haupttropfen, so entsteht ein einziger Tropfen, dessen Geschwindigkeit sich aufgrund des elastischen Vereinigungsvorgangs deutlich verlangsamt. Reißt der Materialfaden hingegen sowohl am Düsenausgang als auch am Haupttropfen ab, so kann sich durch elastisches Zusammenziehen ein zweiter Tropfen (Satellit) bilden. Satellit und Haupttropfen können nacheinander auf der Substratoberfläche (Arbeitsebene) auftreffen, können sich aber auch während der Flugphase noch zu einem einzigen Tropfen vereinen. Der abgerissene Materialfaden kann sich jedoch auch an mehreren Stellen verjüngen und schlussendlich mehrere Satellitentropfen bilden, die alle nacheinander auf dem Substrat auftreffen. Reißt der Materialfaden nicht unmittelbar am Düsenausgang ab, so zieht sich der am Düsenausgang verbliebene Teil des Materialfadens zusammen und verklebt in der Folge die Düse, was zum Ausfall des Druckkopfes führt. Bedenkt man des Weiteren, dass der Verfahrroboter, welcher den Druckkopf in der x,y-Ebene positioniert, die x,y-Ebene kontinuierlich abfährt (also ohne Halt an den einzelnen Punkten (x,y)), so wird verständlich, dass die Bildung von Satelliten zwangsläufig zu einem unscharfen Druckbild führt, da sich die Druckdüse bis zum Zeitpunkt des Abreißens des Materialfadens am Düsenausgang bereits in Richtung des nächsten (x,y) Punktes weiterbewegt hat (typische Geschwindigkeiten der Verfahreinheit liegen zwischen 0,1 und 1 m/s). Der auf der Arbeitsebene mit hoher Geschwindigkeit auftreffende Tropfen kann sich ebenfalls auf unterschiedliche Weise verhalten. Er kann beispielsweise zu einem kugelsegment-, kegel- oder Donut-artigen Gebilde verformt werden, wobei die meist kreisförmige Grundfläche dieses Gebildes infolge des Auseinanderfließens des Tropfens einen größeren Durchmesser als die Düse aufweist. Der Tropfen kann beim Auftreffen auch ein kronenartiges Gebilde formen, welches unmittelbar anschließend winzige Tröpfchen in radialer Richtung verspritzt (splashing). Auch dieses Splashing führt zu einem unsauberen Druckbild. Der platzierte Tropfen kann infolge der extrem hohen Scherrate in der Düse infolge langsamer Relaxation in die Ausgangsviskosität eine noch sehr niedrige Viskosität aufweisen und zu stark auseinanderfließen. Aus diesem Grund werden Siliconkautschukzusammensetzungen mit relativ niedriger Viskosität, worunter Viskositäten von kleiner 300 Pa.s (bei 25°C und 0,5 s$^{-1}$) verstanden werden sollen, thixotropierende Additive zugesetzt, welche eine rasche Viskositätserholung der gejetteten Masse bewirken und ein übermäßiges Auseinanderfließen oder Verspritzen verhindern. Andererseits kann eine zu schnelle Relaxation in die hohe Ausgangsviskosität bei Vorhandensein einer Fließgrenze zu spitzhütigen Tröpfchengebilden führen, die mangels einer ausreichenden Nivellierung eine raue Oberfläche bilden. Rheologisch dilatantes Verhalten des Tropfens kann sogar zu einem Zurückprallen des aufgeschlagenen Tropfens führen.

Aus dem Voranstehenden ist für den Fachmann ersichtlich, dass nur durch die genaue Abstimmung der technischen Parameter des Druckkopfes mit den rheologischen Materialeigenschaften die Herstellung qualitativ hochwertiger Formartikel möglich ist. Im Fall der Herstellung von Formteilen ausgehend von Siliconkautschukmassen mittels ballistischer 3D-Druckverfahren kommen einige zusätzlich erschwerende Randbedingungen hinzu. Die Herstellung von Siliconelastomeren mit guten mechanischen Eigenschaften (Reißfestigkeit, Dehnbarkeit, Weiterreißwiderstand etc.) ist nur möglich, wenn a) ausreichend lange Siliconpolymere (also mit ausreichend hohem Polymerisationsgrad bzw. Molekulargewicht) eingesetzt werden und b) zugleich aktiv verstärkende Füllstoffe (pyrogen erzeugte Kieselsäuren, Ruße etc.) in der Masse vorhanden sind. Beides führt unvermeidbar zu Siliconkautschukmassen mit hoher Viskosität, die der sauberen Tropfenbildung beim Jetten entgegensteht. Hohe Viskositäten, worunter Viskositäten von 300 Pa.s bis 10 kPa.s (bei 25°C und 0,5 s$^{-1}$) verstanden werden sollen, erschweren das rasche Abreißen des Materialfadens am Düsenausgang, d.h., der Haupttropfen bleibt verhältnismäßig lange Zeit über den Materialfaden mit der Düse verbunden, während sich der Druckkopf permanent weiterbewegt. Zum anderen ist für die rasche Ausbildung eines diskreten Tropfens beim Jetten eine hohe Oberflächenspannung des Materials notwendig. Die Oberflächenspannung verursacht stets eine Minimierung der Oberfläche eines Gebildes, d.h., sie strebt eine Kugelgestalt an, was z.B. die Satellitenbildung und ein Splashing verhindern kann. Die Oberflächenspannung von Siliconen zählt jedoch zu den niedrigsten im Elastomerbereich (noch niedrigere Oberflächenspannungen weisen lediglich perfluorierte Kohlenwasserstoffe auf). Aufgrund dieser Nachteile hinsichtlich Viskosität und Oberflächenenergie galt die Herstellung elastomerer Formkörper aus hochviskosen Siliconkautschukmassen im Jetting-Verfahren bislang als nicht durchführbar. Tatsächlich wird diese Sichtweise auch durch zahlreiche wissenschaftliche Publikationen gestützt. Charakterisiert man die zu jettenden Materialien und Druckventile durch Eigenschaften, welche für die Verarbeitbarkeit maßgeblich sind, nämlich Düsendurchmesser, Ausstoßgeschwindigkeit, Tropfengeschwindigkeit, Tropfenvolumen, Dichte, Oberflächenspannung und Viskosität bei Prozess-Scherrate, so lassen sich charakteristische dimensionslose Größen definieren, welche das Wechselspiel der beim Jetting auftretenden Trägheitskräfte, viskosen Kräfte, Oberflächenspannungen, Fließeigenschaften, Reibungskräfte etc. beschreiben. Zu diesen Größen gehören beispielsweise die Reynolds Zahl, die Ohnesorge Zahl, die Weber Zahl und die Z-Zahl. Anhand dieser Zahlen lassen sich Parameterbereiche ableiten, innerhalb derer ein Jetting (ohne Satellitenbildung, splashing, blocking etc.) möglich sein sollte (vgl. z.B. Brian Derby, Inkjet Printing of Functional and Structural Materials: Fluid Property Requirements, Feature Stability, and Resolution, Annu. Rev. Mater. Res. 2010. 40:395-414). Setzt man die typischen Eigenschaften von Siliconkautschukmassen in diese Gleichungen ein, gelangt man unabhängig von der Wahl der technischen Parameter des Druckkopfes nicht in den "grünen" Parameterbereich, was nahelegt, dass ein Jetting von hochviskosen Siliconkautschukmassen, welches den Anforderungen eines 3D-Drucks genügt, nicht möglich sein sollte.

Obwohl einige Hersteller von Druckventilen verarbeitbare Viskositäten von bis zu ca. 2 Mio mPa.s (bei niedriger Scherrate) angeben, so zeigt die Praxis, dass derart hochviskose Materialien in der Regel nicht gejettet werden können, weil der zum Ausstoßen des Materialtropfens notwendige Druck infolge der hohen Materialviskosität unzureichend ist und das Druckventil blockiert (*blocking*).

Aufgabe der vorliegenden Erfindung war daher die Bereitstellung von Siliconkautschukzusammensetzungen, die den Anforderungen an Verarbeitungseigenschaften und -zeit für einen Einsatz in ballistischen generativen Verfahren (3D-Druck) genügen, und so eine qualitativ hochwertige, industrielle Erzeugung elastomerer Formkörper ermöglichen.

In umfangreichen Versuchen wurde unerwartet festgestellt, dass nur die erfindungsgemäßen hochviskosen Siliconkautschukzusammensetzungen mittels 3D-Druck im ballistischen Verfahren zur Herstellung von qualitativ hochwertigen elastomeren Formteilen geeignet sind, da diese, rezepturbedingt, über spezielle rheologische Eigenschaften verfügen. Dabei wurde gefunden, dass der Grad des scherverdünnenden Verhaltens, charakterisiert anhand eines nominellen Fließindex n, die erfindungsgemäße Größe für n aufweisen muss. Insbesondere wurde überraschend festgestellt, dass die mittels des Fließindex n charakterisierte Art des scherverdünnenden Verhaltens im Fall hochviskoser Siliconkautschukmassen entscheidend für die Qualität des Druckbildes ist, und nicht etwa, was naheliegend wäre, die sich nach starker Scherung der Siliconkautschukmasse einstellende, aufgrund des scherverdünnenden Verhaltens deutlich niedrigere Viskosität ($\eta_2$). Überraschend zeigt sich also, dass weder die Ausgangsviskosität ($\eta_1$) noch die sich nach starker Scherung einstellende Endviskosität ($\eta_2$) maßgeblich sind, sondern Art und Umfang des scherverdünnenden Verhaltens, charakterisiert anhand des nominellen Fließindex n.

Vorteil der erfindungsgemäßen hochviskosen Siliconkautschukzusammensetzungen ist, dass sie ausnahmslos ein qualitativ hochwertiges Druckbild liefern, wohingegen die nichterfindungsgemäßen hochviskosen Siliconkautschukzusammensetzungen entweder zum Blockieren und Verkleben des Druckventils oder zu einem knörzelartigen Erscheinungsbild führen.

Die erfindungsgemäßen hochviskosen Siliconkautschukzusammensetzungen für den 3D-Druck von Siliconformteilen im ballistischen generativen DOD-Verfahren haben eine Viskosität $\eta_1$ (jeweils bei 25°C und 0,5 s$^{-1}$) im Bereich von 300 Pa·s bis 10 kPa·s, und enthalten

(A) 50 bis 95 Gew.-% mindestens einer Organosiliciumverbindung mit durchschnittlich mindestens zwei aliphatisch ungesättigten Gruppen pro Molekül,
(B) 1 bis 10 Gew.-% mindestens einer Organosiliciumverbindung mit durchschnittlich mindestens zwei SiH-Gruppen pro Molekül,
oder anstelle von (A) + (B) oder zusätzlich zu (A) und (B)
(G) 0-95 Gew.-% mindestens einer Organosiliciumverbindung mit durchschnittlich mindestens zwei aliphatisch ungesättigten Gruppen und mindestens zwei SiH-Gruppen pro Molekül,
(C) 0,1 bis 500 Gew.-ppm mindestens eines Hydrosilylierungskatalysators bezogen auf den Gehalt des Metalls zur gesamten Siliconzusammensetzung,
(D) 1 bis 50 Gew.-% mindestens eines aktiv verstärkenden Materials,
(E) 0 bis 30 Gew.-% Hilfsstoffe, die sich von den anderen Bestandteilen der Zusammensetzung unterscheiden, wobei die Komponente (E) aus der Gruppe bestehend aus Inhibitoren, Hitzestabilisatoren, Lösungsmitteln, Weichmachern, Farbpigmenten, Sensibilisatoren, Photoinitiatoren, Haftvermittlern, nicht-verstärkenden Füllstoffen, Thixotropiermitteln, Leitfähigkeitsadditiven und Siliconharzen ausgewählt wird,
dadurch gekennzeichnet, dass der nominelle Fließindex n der Siliconkautschukzusammensetzung im folgenden Bereich liegt:

$$-1,00 < n < -0,40,$$

wobei sich n aus Formel (X) ergibt:

$$\log \eta = \log K + n * \log v, \qquad (X)$$

wobei

η die Viskosität bei der Scherrate v,
K den nominellen Konsistenzindex,
v die Scherrate und
log den dekadischen Logarithmus darstellt,

und die Bestimmung der Viskosität $\eta_1$, des nominellen Fließindex n sowie des nominellen Konsistenzindex K nach Formel (X) gemäß der in der Beschreibung offenbarten Rheologischen Messmethode erfolgt.

Die Art und der Umfang des scherverdünnenden Verhaltens und damit der Grad des scherverdünnenden Verhaltens wird mit dem nominellen Fließindex n charakterisiert, wobei n < 0 scherverdünnendes, n > 0 scherverdickendes (dilatantes) und n = 0 newtonsches Fließverhalten beschreibt.

Die erfindungsgemäßen hochviskosen Siliconkautschukzusammensetzungen haben vorzugsweise eine Vis-kosität $\eta_1$ (jeweils bei 25°C und 0,5 s$^{-1}$) im Bereich von 400 Pa·s bis 5 kPa.s, und besonders bevorzugt von 500 Pa·s bis 3 kPa·s.

Der nominelle Fließindex n der erfindungsgemäßen Siliconkautschukzusammensetzungen liegt vorzugsweise im Bereich -0,80 < n < -0,45 und besonders bevorzugt im Bereich -0,70 < n < -0,50.

**Bestandteil (A)** der erfindungsgemäßen Siliconkautschukzusammensetzungen ist eine mindestens zwei aliphatische Kohlenstoff-Kohlenstoff-Mehrfachbindungen aufweisende Organosiliciumverbindung, vorzugsweise lineare oder verzweigte Polyorganosiloxane aus Einheiten der Formel (I):

$$R_aR^1_bSiO_{(4-a-b)/2} \qquad (I),$$

wobei

R gleich oder verschieden sein kann und einen von aliphatischen Kohlenstoff-Kohlenstoff-Mehrfachbindungen freien, ggf. halogensubstituierten, gegebenenfalls O-, N-, S- oder P-Atome enthaltenden $C_1$-$C_{20}$-Rest bedeutet,
$R^1$ gleich oder verschieden sein kann und einen einwertigen, gegebenenfalls substituierten organischen Rest mit aliphatischer Kohlenstoff-Kohlenstoff-Mehrfachbindung bedeutet, a 0, 1, 2 oder 3 ist und
b 0, 1 oder 2 ist
mit der Maßgabe, dass a + b < 4 ist und durchschnittlich mindestens 2 Reste $R^1$ pro Molekül vorliegen.

Bei Rest R kann es sich um ein- oder mehrwertige Reste handeln, wobei die mehrwertigen Reste, wie bivalente, trivalente und tetravalente Reste, dann mehrere, wie etwa zwei, drei oder vier Siloxy-Einheiten der Formel (I) miteinander verbinden.

Vorzugsweise sind die Reste R über ein Kohlenstoff- oder Sauerstoffatom am Silicium gebunden. Beispiele für SiCgebundene Reste R sind Alkylreste (z.B. Methyl-, Ethyl-, Octyl- und Octadecylrest), Cycloalkylreste (z.B. Cyclopentyl-, Cyclohexyl- und Methylcyclohexylrest), Arylreste (z.B. Phenyl- und Naphthylrest), Alkarylreste (z.B. Tolyl- und Xylylrest) und Aralkylreste (z.B. Benzyl- und beta-Phenylethylrest). Beispiele für substituierte Reste R sind 3,3,3-Trifluor-n-propyl-, p-Chlorphenyl-, Chlormethyl-, Glycidoxypropyl- und -$(CH_2)_n$-$(OCH_2CH_2)_m$-$OCH_3$., wobei n und m gleiche oder verschiedene ganze Zahlen zwischen 0 und 10 sind. Beispiele für SiO-gebundene Reste R sind Alkoxygruppen (z.B. Methoxy-, Ethoxy-, iso-Propoxy- und tert.-Butoxyreste) und der p-Nitrophenoxyrest.

Bei Rest $R^1$ kann es sich um beliebige, einer Anlagerungsreaktion (Hydrosilylierung) mit einer SiHfunktionellen Verbindung zugängliche Gruppen handeln. Bevorzugt handelt es sich bei Rest $R^1$ um Alkenyl- und Alkinylgruppen mit 2 bis 16 C-Atomen, wie Vinyl-, Allyl-, Methallyl-, 1-Propenyl-, 5-Hexenyl-, Ethinyl-, Butadienyl-, Hexadienyl, Undecenyl, Cyclopentenyl-, Cyclopentadienyl-, Norbornenyl- und Styrylrest, wobei Vinyl-, Allyl- und Hexenylreste besonders bevorzugt sind. Falls es sich bei Rest $R^1$ um substituierte aliphatisch ungesättigte Gruppen handelt, sind als Substituenten Halogenatome, Cyano- und Alkoxygruppen bevorzugt. Beispiele für substituierte Reste $R^1$ sind Allyloxypropyl- und der Isopropenyloxyrest.

Bevorzugt als Bestandteil (A) ist die Verwendung vinylfunktioneller, im Wesentlichen linearer Polydiorganosiloxane mit einer Viskosität von 100 bis 500.000 mPa.s, besonders bevorzugt zwischen 1.000 und 50.000 mPa.s (bei 25°C und 0,8 sec$^{-1}$). Bestandteil (A) kann eine Mischung unterschiedlicher siliciumorganischer Verbindungen der oben beschriebenen Art sein.

Der Gehalt der erfindungsgemäßen Siliconkautschukzusammensetzung an Bestandteil (A) beträgt 50 bis 95 Gew.-%, bevorzugt 70 bis 90 Gew.-%, besonders bevorzugt 65 bis 80 Gew.-%.

**Bestandteil (B)** ist eine beliebige SiH-funktionelle siliciumorganische Verbindung mit durchschnittlich mindestens zwei SiH-Gruppen. Bestandteil (B) fungiert als Vernetzer der Siliconkautschukzusammensetzung. Bestandteil (B) kann auch eine Mischung verschiedener SiH-funktioneller siliciumorganischer Verbindungen sein. Vorzugsweise stellt Bestandteil (B) lineare, cyclische, verzweigte oder harzartige Polyorganosiloxane mit Si-gebundenen Wasserstoffatomen dar, welche aus Einheiten der Formel (II)

$$R_cH_dSiO_{(4-c-d)/2} \qquad (II)$$

zusammengesetzt sind, wobei

R gleich oder verschieden sein kann und die oben gegebene Bedeutung hat,
c 0, 1, 2 oder 3 ist und
d 0, 1 oder 2 ist,

mit der Maßgabe, dass die Summe von (c+d) kleiner oder gleich 3 ist und durchschnittlich mindestens zwei Si-gebundene Wasserstoffatome je Molekül vorhanden sind.

Vorzugsweise enthält Bestandteil (B) Si-gebundenen Wasserstoff im Bereich von 0,04 bis 1,7 Gewichtsprozent (Gew.-%) bezogen auf das Gesamtgewicht des Organopolysiloxans (B). Das Molekulargewicht des Bestandteils (B) kann in weiten Grenzen variieren, etwa zwischen $10^2$ und $10^6$ g/mol. So kann es sich bei dem Bestandteil (B) beispielsweise um ein relativ niedrigmolekulares SiH-funktionelles Oligosiloxan, wie Tetramethyldisiloxan, handeln, jedoch auch um kettenständige oder endständige SiH-Gruppen verfügendes hochpolymeres Polydimethylsiloxan oder ein SiH-Gruppen aufweisendes Siliconharz. Bevorzugt ist die Verwendung niedermolekularer SiH-funktioneller Verbindungen, wie Tetrakis(dimethylsiloxy)silan und Tetramethylcyclotetrasiloxan, und SiH-haltiger Siloxane, wie Poly(hydrogenmethyl)siloxan und Poly(dimethyl-hydrogenmethyl)siloxan mit einer Viskosität von 10 bis 1000 mPa.s (bei 25°C und 0,8 sec$^{-1}$). Bevorzugt sind Bestandteile (B), welche mit dem Bestandteil (A) verträglich (homogen mischbar oder zumindest emulgierbar) sind. Je nach Art des Bestandteils (A) kann es daher erforderlich sein, Bestandteil (B) geeignet zu substituieren, z.B. indem ein Teil der Methylgruppen durch 3,3,3-Trifluorpropyl- oder Phenylgruppen ersetzt wird.

Bestandteil (B) kann einzeln oder als Mischung aus mindestens zwei verschiedenen (B) eingesetzt werden und ist vorzugsweise in einer solchen Menge in der erfindungsgemäßen Siliconkautschukzusammensetzung enthalten, dass das Molverhältnis von SiH-Gruppen zu aliphatisch ungesättigten Gruppen bei 0,1 bis 20, bevorzugt zwischen 0,5 und 5, besonders bevorzugt zwischen 1 und 2 liegt. Der Gehalt der erfindungsgemäßen Siliconkautschukzusammensetzung an Bestandteil (B) beträgt 0,1 bis 15 Gew.-%, bevorzugt 0,5-10 Gew.-%, besonders bevorzugt 2-5 Gew.-%.

**Bestandteil (G)** kann anstelle von (A)+(B) oder zusätzlich zu (A) und (B) eingesetzt werden. In den erfindungsgemäßen additionsvernetzenden Zusammensetzungen sind also folgende Kombinationen möglich: (A) + (B) oder (A) + (G) oder (B) + (G) oder (A)+(B)+(G) oder (G) alleine. (G) ist eine Organosiliciumverbindung mit mindestens zwei aliphatisch ungesättigten Gruppen und mindestens zwei SiH-Gruppen pro Molekül und kann somit mit sich selbst vernetzen. Verbindungen (G) sind dem Fachmann aus dem Stand der Technik allgemein bekannt. Falls Verbindungen (G) eingesetzt werden, handelt es sich vorzugsweise um solche aus Einheiten der allgemeinen Formeln

$$R^7_kSiO_{(4-k)/2} \ (VI), \quad R^7_mR^6SiO_{(3-m)/2} \ (VII) \quad \text{und} \quad R^7_oHSiO_{(3-o)/2} \qquad (VIII),$$

wobei

R$^7$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und
R$^6$ einen einwertigen Kohlenwasserstoffrest mit terminaler, aliphatischer Kohlenstoff-Kohlenstoff-Mehrfachbindung mit 2 bis 8 Kohlenstoffatomen je Rest,
k 0, 1, 2 oder 3,
m 0, 1 oder 2,
o 0, 1 oder 2,

bedeuten,

mit der Maßgabe, dass in (G) durchschnittlich mindestens 2 Reste $R^6$ und durchschnittlich mindestens 2 Si-gebundene Wasserstoffatome vorliegen.

Es kann eine einzelne Verbindung (G) oder eine Mischung aus mindestens zwei Verbindungen (G) eingesetzt werden. Der Gehalt der erfindungsgemäßen Siliconkautschukzusammensetzung an Bestandteil (G) beträgt 0 -95 Gew.-%, bevorzugt 0-50 Gew.-%, besonders bevorzugt 0-10 Gew.-%.

**Bestandteil (C)** dient als Katalysator für die Additionsreaktion (Hydrosilylierung) zwischen den aliphatisch ungesättigten Gruppen des Bestandteils (A) und den siliciumgebundenen Wasserstoffatomen des Bestandteils (B) bzw. (G). Prinzipiell können alle üblicherweise in additionsvernetzenden Siliconkautschukzusammensetzungen eingesetzten Hydrosilylierungskatalysatoren verwendet werden. Als die Anlagerung von Si-gebundenem Wasserstoff an aliphatische Mehrfachbindung fördernde Katalysatoren (C) sind beispielsweise Platin, Rhodium, Ruthenium, Palladium, Osmium oder Iridium, eine metallorganische Verbindung oder eine Kombination davon geeignet. Beispiele für solche Katalysatoren (C) sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6 \cdot 6H_2O$, $Na_2PtCl_4 \cdot 4H_2O$, Platinacetylacetonat und Komplexe der besagten Verbindungen, die in einer Matrix oder einer kernschalenartigen Struktur eingekapselt sind, Platin-Olefin-Komplexe, Platin-Phosphit-Komplexe Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinyl-Siloxankomplexe, wie Platin-1,3-Divinyl-1,1,3,3-tetra-methyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe, Trimethyl-cyclopentadienyl-platin(IV), Trimethyl[(3-trimethoxysilyl)propyl-cyclopentadienyl]-platin(IV).

Die aufgeführten Hydrosilylierungskatalysatoren ermöglichen in der Regel selbst bei Raumtemperatur eine rasche Vernetzung der Siliconkautschukzusammensetzung. Da die Hydrosilylierungsreaktion sofort nach Vermischen aller Bestandteile einsetzt, werden additionsvernetzende Massen meist in Form von mindestens zwei Komponenten formuliert, wobei eine Komponente A den Platinkatalysator (C) und eine andere Komponente B den Vernetzer (B) oder (G) enthält. Um auch nach Vermischen der beiden Komponenten eine ausreichende Verarbeitungszeit zur Verfügung zu haben, werden meist Inhibitoren zugesetzt, welche das Einsetzen der Vernetzungsreaktion hinauszögern. Durch Zufuhr von Wärme kann dann eine rasche Vernetzung herbeigeführt werden. Für die Verwendung additionsvernetzender Massen im 3D-Druck-Verfahren sind jedoch solche Hydrosilylierungskatalysatoren bevorzugt, welche thermisch schlecht, jedoch durch energiereiche Strahlung (UV, UV-VIS) sehr leicht aktiviert werden können, d.h., die deponierte erfindungsgemäße Siliconkautschukzusammensetzung wird nicht thermisch, sondern vorzugsweise durch UV- oder UV-VIS-Strahlung initiiert vernetzt. Dies erfolgt beispielsweise entweder über einen aktivierbaren Hydrosilylierungskatalysator oder über einen deaktivierbaren zusätzlich enthaltenen Inhibitor (F). Gegenüber einer thermischen Vernetzung hat die UV-oder UV-VIS-induzierte Vernetzung zahlreiche Vorteile. Zum einen können Intensität, Einwirkungszeit und Einwirkungsort der UV-Strahlung genau bemessen werden, während das Aufheizen der tropfenweise abgeschiedenen Siliconkautschukzusammensetzung (wie auch deren anschließendes Abkühlen) durch die relativ geringe thermische Leitfähigkeit stets verzögert erfolgt. Aufgrund des intrinsisch sehr hohen thermischen Ausdehnungskoeffizienten der Silicone führen die bei der thermischen Vernetzung zwangsläufig vorhandenen Temperaturgradienten zu mechanischen Spannungen, welche die Maßhaltigkeit des gebildeten Formteils negativ beeinflussen, was im Extremfall zu inakzeptablen Formverzerrungen führen kann. Ein weiterer Vorteil der UV/VIS-induzierten Additionsvernetzung zeigt sich bei der Herstellung von Mehrkomponentenformteilen, wie beispielsweise Hart-Weichverbunden, die neben dem Siliconelastomer einen Thermoplasten enthalten, dessen thermisch bedingter Verzug vermieden wird.

UV/VIS-induzierte additionsvernetzende Siliconkautschukzusammensetzungen werden beispielsweise in DE 10 2008 000 156 A1, DE 10 2008 043 316 A1, DE 10 2009 002 231 A1, DE 10 2009 027 486 A1, DE 10 2010 043 149 A1 und WO 2009/027133 A2 beschrieben. Die Vernetzung kommt durch UV/VISinduzierte Aktivierung eines lichtempfindlichen Hydrosilylierungskatalysators (C) zustande, wobei durch UV-oder UV-VIS-Strahlung aktivierbare Platinkatalysatoren bevorzugt sind. In der Fachliteratur werden zahlreiche durch Licht aktivierbare Platinkatalysatoren beschrieben, die unter Lichtausschluss weitgehend inaktiv sind und durch Bestrahlung mit Licht mit einer Wellenlänge von 250-500 nm in bei Raumtemperatur aktive Platinkatalysatoren überführt werden können. Beispiele hierfür sind ($\eta$-Diolefin)($\sigma$-aryl)-Platinkomplexe (EP 0 122 008 A1; EP 0 561 919 B1), Pt(II)-$\beta$-diketonatkomplexe (EP 0 398 701 B1) und ($\eta^5$-Cyclopentadienyl)tri($\sigma$-alkyl)Platin(IV)-Komplexe (EP 0 146 307 B1, EP 0 358 452 B1, EP 0 561 893 B1). Besonders bevorzugt sind $MeCpPtMe_3$ sowie die sich davon durch Substitution der am Platin befindlichen Gruppen ableitenden Komplexe wie beispielsweise beschrieben in EP 1 050 538 B1 und EP 1 803 728 B1.

Die UV- oder UV-VIS-induziert vernetzenden Silikonkautschukzusammensetzungen können ein- oder mehrkomponentig formuliert werden.

Die Geschwindigkeit der UV/VIS-induzierten Additionsvernetzung hängt von zahlreichen Faktoren ab, insbesondere von der Art und Konzentration des PlatinKatalysators, von der Intensität, Wellenlänge und Einwirkungszeit der UV/VIS-Strahlung, der Transparenz, Reflektivität, Schichtdicke und Zusammensetzung der Silikonkautschukzusammensetzung und der Temperatur. Für die Aktivierung der UV/VIS-induzierten additionsvernetzenden Silikonkautschukzusammensetzungen wird Licht der Wellenlänge 240-500 nm, bevorzugt 300-450 nm, besonders bevorzugt 350-400 nm eingesetzt. Um eine rasche Vernetzung zu erzielen, worunter eine Vernetzungszeit bei Raumtemperatur von weniger als 20 min, vorzugsweise weniger als 10 min, besonders bevorzugt weniger als 1 min. verstanden werden soll, empfiehlt sich die Verwendung einer UV/VIS-Strahlungsquelle mit einer Leistung zwischen 10 mW/cm$^2$ und 15.000 mW/cm$^2$, sowie eine Strahlungsdosis zwischen 150 mJ/cm$^2$ und 20.000 mJ/cm$^2$, bevorzugt zwischen 500 mJ/cm$^2$ und 10.000 mJ/cm$^2$. Im Rahmen dieser Leistungs- und Dosis-Werte lassen sich flächenspezifische Bestrahlungszeiten zwischen maximal 2.000 s/cm$^2$ und minimal 8 ms/cm$^2$ realisieren. Es können mehrere, auch unterschiedliche Strahlungsquellen verwendet werden.

Der Hydrosilylierungskatalysator sollte vorzugsweise in einer katalytisch ausreichenden Menge eingesetzt werden, so dass eine hinreichend schnelle Vernetzung bei Raumtemperatur ermöglicht wird. Typischerweise werden 0,1 bis 500 Gew.-ppm des Katalysators bezogen auf den Gehalt des Metalls zur gesamten Siliconkautschukzusammensetzung verwendet, vorzugsweise 0,5-200 Gew.-ppm, besonders bevorzugt 1-50 Gew.-ppm. Es können auch Mischungen unterschiedliche Hydrosilylierungskatalysatoren verwendet werden.

**Bestandteil (D)**

Unter dem Begriff "aktiv verstärkendes Material" oder synonym "verstärkendes Material" wird im Rahmen dieser Erfindung ein (aktiv) verstärkender Füllstoff verstanden. Im Vergleich zu (inaktiven) nicht-verstärkenden Füllstoffen verbessern aktiv verstärkende Füllstoffe die mechanischen Eigenschaften der Elastomere, in denen sie eingesetzt werden. Inaktive Füllstoffe wirken dagegen als Streckmittel und verdünnen das Elastomer. Die Begriffe "aktiv verstärkendes Material", "aktiv verstärkender Füllstoff", "verstärkendes Material" und "verstärkender Füllstoff" werden im Rahmen der vorliegenden Erfindung synonym verwendet.

Bestandteil (D) ist notwendig, um eine ausreichende mechanische Festigkeit des Siliconelastomers zu erzielen. Unter mechanischer Festigkeit wird die Gesamtheit der für Elastomere typischen Eigenschaften verstanden, insbesondere Härte, Reißdehnung, Reißfestigkeit und Weiterreißwiderstand. Um diesbezüglich ansprechende Eigenschaften zu erzielen ist der Zusatz aktiv verstärkender Materialien unverzichtbar. Hierzu zählen vor allem

(D1) feinteilige, partikuläre Materialien wie pyrogen erzeugte Kieselsäuren, Titandioxide, Aluminiumoxide, Aerogele und Ruße mit einer hohen spezifischen Oberfläche zwischen 50 und 1000 m$^2$/g (gemessen nach der BET-Methode nach DIN 66131 und DIN 66132) sowie

(D2) Nanopartikel (SiO$_2$, TiO$_2$, exfolierte Schichtsilikate, Kohlenstoff-Nanoröhrchen etc.).

Vorzugsweise wird die Komponente (D) aus der Gruppe bestehend ausschließlich aus (D1) pyrogen erzeugten Kieselsäuren, Titandioxide, Aluminiumoxide, Aerogele und Ruße mit einer hohen spezifischen Oberfläche zwischen 50 und 1000 m$^2$/g, gemessen nach der BET-Methode nach DIN 66131 und DIN 66132, und (D2) Nanopartikeln bestehend aus SiO$_2$, TiO$_2$, exfolierte Schichtsilikaten oder Kohlenstoffnanoröhren ausgewählt.

Bevorzugt wird (D1) als verstärkender Füllstoff eingesetzt. Besonders wirksames und bevorzugtes Verstärkungsmittel (D1) ist die pyrogen (z.B. durch Reaktion von Siliziumhalogenverbindungen in einer Wasserstoff-Sauerstoff-Flamme) hergestellte Kieselsäure (*fumed silica*).

Pyrogen hergestellte Kieselsäure ist aufgrund der auf ihrer Oberfläche befindlichen Silanolgruppen (-SiOH) hydrophil. Es ist jedoch üblich und bevorzugt, hydrophobe Kieselsäuren in Siliconkautschukzusammensetzungen zu verwenden, um höhere Füllstoffgehalte (und damit bessere mechanische Eigenschaften) ohne übermäßigen Viskositätsanstieg und ohne Phaseninversion zu erzielen. Zudem wird das Vermischen der Siliconbestandteile und der Kieselsäure durch den hydrophoben Charakter wesentlich erleichtert. Die Hydrophobierung der Kieselsäure, die hauptsächlich durch Silylierung erfolgt, ist dem Fachmann bekannt und beispielsweise in den Offenlegungsschriften EP 686676 B1, EP 1433749 A1 und DE 102013226494 A1 beschrieben. Infolge der Hydrophobierung (Silylierung) der Kieselsäureoberfläche verringert sich die Silanolgruppendichte typischerweise von 1,8 bis 2,5 SiOH/nm$^2$ auf kleiner 1,8 bis kleiner 0,9 Silanolgruppen pro nm$^2$ (bestimmt mittels Säure-Base-Titration wie gegeben in G. W. Sears, Anal. Chem. 1956, 28, 1981). Gleichzeitig erhöht sich der Kohlenstoffgehalt der Kieselsäure auf 0,4 bis 15 Gew,-% Kohlenstoff (bestimmt mittels Elementaranalyse), wobei das Gewicht auf die hydrophobe Kieselsäure bezogen ist.

Die Verwendung von Verstärkungsmitteln (D2) ist möglich, jedoch nicht bevorzugt, weil nicht praktikabel im industriellen Maßstab. Aufgrund der sehr geringen intermolekularen Wechselwirkungen zwischen Siliconen, erweist sich die Herstellung echter nanopartikulärer Siliconkautschukzusammensetzungen als sehr schwierig. Meist erfolgt rasche Re-Agglomerierung der Nanopartikel oder es kommt zu keiner Exfolierung bzw. Intercalation von Schichtsilikaten im Silicon.

Es können auch mehrere unterschiedliche Verstärkungsmittel (D) verwendet werden.

Der Gehalt an Verstärkungsmittel (D) bezogen auf die gesamte vernetzbare Siliconkautschukzusammensetzung liegt zwischen 1 und 50 Gew.-%, vorzugsweise zwischen 5 und 30 Gew.-%, besonders bevorzugt zwischen 10 und 25 Gew.-%.

**Bestandteil (E)** ist dem Fachmann bekannt und umfasst Inhibitoren, Hitzestabilisatoren, Lösungsmittel, Weichmacher, Farbpigmente, Sensibilisatoren, Photoinitiatoren, Haftvermittler, inaktive Füllstoffe, Thixotropiermittel, Leitfähigkeitsadditive, Siliconharze, die sich von den anderen Bestandteilen unterscheiden.

Im Folgenden soll dargelegt werden, wie der nominelle Fließindex n sowie die Viskosität $\eta_1$, welche für die Verarbeitung von hochviskosen Siliconzusammensetzungen im DOD-3D-Druckverfahren von entscheidender Bedeutung sind, gezielt eingestellt werden können.

Die oben aufgeführten partikulären Materialien (D1) und (D2) zählen zu den verstärkenden Füllstoffen. Im Unterschied zu den nicht verstärkenden Füllstoffen, z.B. Kreide, Quarzmehl, Kunststoffpulver etc., weisen verstärkende Füllstoffe eine hohe spezifische Oberfläche auf, wodurch eine sehr hohe Zahl an Füllstoff-Füllstoff- sowie Füllstoff-Silicon-Wechselwirkungen zustande kommt. Diese Wechselwirkungen führen die gewünschte, hohe mechanische Festigkeit des resultierenden Siliconelastomers herbei.

Eine weitere Möglichkeit, um ein hohes Niveau an mechanischer Festigkeit und Elastizität zu erreichen, ist die Verwendung von langkettigen (und damit höherviskosen) Siliconpolymeren. Kurzkettige Siliconpolymere enthaltende Siliconzusammensetzungen können zwar zu sehr harten Materialien vernetzt werden, liefern jedoch weniger reißfeste und weniger elastische Siliconelastomere.

Die Verwendung verstärkender Füllstoffe in Kombination mit langkettigen Siliconpolymeren führt durch die oben genannten Wechselwirkungen zu relativ hochviskosen Siliconzusammensetzungen. Der Viskosität der Siliconzusammensetzung wird jedoch durch das gewünschte Verarbeitungsverfahren eine Obergrenze (oft auch zusätzlich eine Untergrenze) gesetzt. So werden die extrem hochviskosen (festpastösen) Festsiliconkautschuke typischerweise im Pressmoldingverfahren oder durch Kalandrieren etc. verarbeitet.

Die Verarbeitung im DOD-3D-Druckverfahren stößt trotz aller technologischen Fortschritte bei immer höher viskosen Siliconzusammensetzungen zunehmend an seine Grenzen. Im Einzelfall muss daher zwischen der angestrebten hohen mechanischen Festigkeit des Siliconelastomers und der Verarbeitbarkeit der unvernetzten Siliconzusammensetzung ein Kompromiss eingegangen werden.

Grundsätzlich ist man mit dem Problem konfrontiert, die Viskosität der Siliconzusammensetzung $\eta_1$ aus Gründen der Verarbeitbarkeit möglichst niedrig zu halten, zugleich aber möglichst hohe mechanische Festigkeitswerte zu erzielen. Die Viskosität der Siliconzusammensetzung $\eta_1$ (da deren Messung bei sehr niedriger Scherung erfolgt, kann diese auch als Ruheviskosität oder Ausgangsviskosität aufgefasst werden) wird vor allem durch die Art und den Gehalt an verstärkendem Füllstoff (D) sowie die Kettenlänge (Viskosität) der eingesetzten Siliconpolymere (Komponenten (A, (B) und/oder (G)) festgelegt.

Dem Fachmann sind zahlreiche Möglichkeiten bekannt, um die Viskosität $\eta_1$ niedrig zu halten, ohne die mechanischen Festigkeitswerte wesentlich zu verringern. Hierzu zählt z.B. die Hydrophobierung des Füllstoffs (beispielsweise durch Silylierung von feinteiliger Kieselsäuren), wodurch die durch den Füllstoff bedingte Erhöhung der Viskosität enorm verringert werden kann. Des Weiteren ist es möglich, durch die Verwendung relativ kurzkettiger Vinyl-endständiger Siliconpolymere (Komponente (A)) in Kombination mit relativ kurzkettigen SiHendständigen Siliconpolymeren (Komponente (B)) bzw. durch die Verwendung relativ kurzkettiger Siliconpolymere der Komponente (G) die Viskosität der Siliconzusammensetzung niedrig zu halten; in diesem Fall erfolgt der Aufbau der langkettigen Siliconpolymere erst im Zuge der Vernetzungsreaktion durch Kettenverlängerung (also erst im Anschluss an den eigentlichen Verarbeitungsschritt wie dem Jetting).

Erweist sich die Viskosität $\eta_1$ als zu hoch, d.h. über 10 kPa·s (bei 25 °C und 0,5 s$^{-1}$), kann dem somit durch (i) Erniedrigung der Füllstoffkonzentration, (ii) Erhöhung der Hydrophobizität des Füllstoffs (beispielsweise durch Einsatz hydrophober Füllstoffe oder durch Hydrophobierung hydrophiler Füllstoffe) und/oder (iii) Erniedrigung der Polymerkettenlänge der Siliconbestandteile entgegengewirkt werden. Die exakte Einstellung der Viskosität $\eta_1$ lässt sich somit durch einfache Routineexperimente erreichen.

Für die Verarbeitbarkeit einer Siliconzusammensetzung im DOD-Verfahren ist jedoch die Ruheviskosität $\eta_1$ nicht allein entscheidend. Auch die Viskosität bei den in der Jetting-Düse auftretenden extrem hohen Schergeschwindigkeiten ist von großer Bedeutung. Die Verarbeitbarkeit hochviskoser Massen im DOD-Verfahren wird überhaupt nur dadurch möglich, dass die Viskosität mit zunehmender Schergeschwindigkeit enorm abnimmt. Dieses Verhalten wird als scherverdünnendes Verhalten bezeichnet. Die Abnahme der Viskosität infolge Scherung kann im DOD-Verfahren mehrere Größenordnungen betragen. Für die Verarbeitbarkeit hochviskoser Siliconzusammensetzungen im DOD-Verfahren ist ein ausgeprägtes scherverdünnendes Verhalten somit unverzichtbar.

Das scherverdünnende Verhalten lässt sich gut durch den nominellen Fließindex n charakterisieren. Der nominelle Fließindex n beschreibt die Abweichung vom sogenannten newtonschen Fließverhalten, welches sich durch eine schergeschwindigkeits-unabhängige Viskosität auszeichnet und durch den Fließindex n=0 charakterisiert wird. n-Werte von größer 0 beschreiben eine Viskositätserhöhung bei zunehmender Schergeschwindigkeit (dilatantes Verhalten). n-Werte von kleiner Null beschreiben scherverdünnendes Verhalten, also eine Viskositätsabnahme bei zunehmender Schergeschwindigkeit. Dieser Zusammenhang lässt sich mit der Gleichung (IX) beschreiben (die logarithmierte Form von Gleichung (IX) ist mit Gleichung(X) identisch):

$$\eta(v) = K * v^n \qquad (IX)$$

wobei $\eta(v)$ die Viskosität $\eta$ bei der Schergeschwindigkeit v bezeichnet und K der nominelle Konsistenzindex ist (für n=0, also im Fall des newtonschen Verhaltens, gilt K= $\eta$).

Um die beiden in der Gleichung (IX) enthaltenen Parameter K und n zu bestimmen, genügt die Kenntnis zweier Wertepaare ($\eta_1$ bei $v_1$) und ($\eta_2$ bei $v_2$). Für das erste Wertepaar lässt sich beispielsweise die Ruheviskosität $\eta_1$ bei $v_1$=0,5 s$^{-1}$ verwenden. Da der beim Jetting auftretende Schergeschwindigkeitsbereich messtechnisch schwierig zu erreichen ist (erfordert Messungen im Hochdruckkapillarviskosimeter), wird für das zweite Wertepaar beispielsweise die Viskosität $\eta_2$ bei $v_2$=25 s$^{-1}$ herangezogen, was jedoch aufgrund der experimentell bestätigten Gültigkeit von Gleichung (IX) keine Einschränkung darstellt.

Siliconzusammensetzungen weisen in der Regel ein scherverdünnendes Verhalten auf, d.h., der nominelle Fließindex n ist negativ. Überraschend wurde jedoch festgestellt, dass unabhängig von der Verarbeitbarkeit der Siliconmasse, welche bei einer hinreichend niedrigen Viskosität unter starker Scherung durchaus gegeben sein kann, nur dann ein befriedigendes Druckbild im DOD-3D-Druckverfahren erhalten wird, wenn der nominelle Fließindex n in einem bestimmten Bereich liegt. Es ist also durchaus möglich, dass eine bei hoher Scherung niedriger viskose Masse ein schlechteres Druckbild liefert als eine bei gleich hoher Scherung höher viskose Masse. Als entscheidend erweist sich vielmehr der Grad des scherverdünnenden Verhaltens, d.h., wie stark die bei Erhöhung der Schergeschwindigkeit auftretende Viskositätsabnahme ist. In anderen Worten: Eine hinreichend niedrige Viskosität bei hoher Scherrate ist eine zwar notwendige Bedingung für die Verarbeitbarkeit im DOD-Verfahren, sie ist aber keine hinreichende Bedingung für ein gutes Druckbild. Eine notwendige und zugleich hinreichende Bedingung dafür stellt die oben genannte Relation -1 < n < -0,40 dar.

Es ergeben sich grundsätzlich folgende Möglichkeiten, um den nominellen Fließindex n in den erfindungsgemäßen Bereich zu bringen:

Siliconpolymere zeichnen sich durch ein nahezu newtonsches Fließverhalten über einen weiten Bereich der Schergeschwindigkeit aus; erst bei sehr hohen Schergeschwindigkeiten erfolgt eine Orientierung der Polymerketten in Fließrichtung, wodurch eine Viskositätsabnahme verursacht wird. Aus diesem Grund ist es weniger effektiv, den Fließindex n durch eine veränderte Zusammensetzung der Siliconbestandteile (Komponenten (A), (B) und/oder (G)) einzustellen.

Wesentlich effektiver erweist sich die Einstellung des scherverdünnenden Verhaltens durch geeignete Wahl des verstärkenden Füllstoffs. Insbesondere ist es möglich, die Oberflächenenergie des Füllstoffs so einzustellen, dass die Füllstoffteilchen in der hydrophoben, unpolaren Siliconmatrix ein auf physikalischen Wechselwirkungen beruhendes Füllstoffnetzwerk aufbauen. Dieses Füllstoffnetzwerk behindert im Ruhezustand die Fließfähigkeit der Siliconbestandteile, bricht jedoch zusammen, sobald eine stärkere Scherung der Siliconzusammensetzung erfolgt, d.h., bei starker Scherung nimmt die Fließfähigkeit der Siliconbestandteile stark zu, was gleichbedeutend mit einem ausgeprägten scherverdünnenden Verhalten ist.

Der durch die starke Scherung herbeigeführte Abbau des Füllstoffnetzwerks ist reversibel, d.h., nach Wegfall der Scherung kehrt die Masse in den ursprünglichen Gleichgewichtszustand zurück (Relaxation).

Die genauere Analyse dieses durch den Füllstoff bedingten scherverdünnenden Verhaltens zeigt, dass eine Erhöhung der Oberflächenenergie der Füllstoffaggregate mit einer stärkeren und schnelleren Ausbildung des Füllstoffnetzwerks verbunden ist, wodurch wiederum eine Anhebung der Ausgangsviskosität (Ruheviskosität) $\eta_1$ erfolgt.

Diese verstärkte Strukturbildung lässt sich unter anderem durch strukturbildende Additive herbeiführen, welche die Oberflächenenergie des Füllstoffs erhöhen. Die verstärkte Strukturbildung lässt sich aber auch durch die Verwendung von weniger stark hydrophoben bzw. hydrophobierten Füllstoffen herbeiführen. Des Weiteren kann Strukturbildung durch eine Erhöhung des Füllstoffgehalts intensiviert werden. Bei gleichem Füllstoffgehalt führt auch eine Erhöhung der spezifischen Oberfläche des Füllstoffs zu einer verstärkten Strukturbildung der Siliconzusammensetzung.

Erweist sich der nominelle Fließindex n somit als zu hoch, d.h. über -0,40, kann dem durch (i) Erniedrigung der Hydrophobizität des Füllstoffs, (ii) durch Erhöhung der Füllstoffkonzentration, (iii) durch Einsatz von Hilfsstoffen, welche die Oberflächengenergie des Füllstoffs erhöhen können (beispielsweise Thixotropierungsmittel) und/oder (iv) durch Erhöhung der spezifischen Oberfläche des Füllstoffs entgegengewirkt werden. Der Fachmann kann damit unter Berücksichtigung der sonstigen an die Siliconzusammensetzung zu stellenden Randbedingungen die am besten geeignete Methode auswählen. Die exakte Einstellung des nominellen Fließindex n lässt sich somit wie beschrieben durch einfache Routineexperimente erreichen.

Erfindungsgemäße Silikonkautschukzusammensetzungen können ein-, zwei- oder mehrkomponentig hergestellt werden. Im einfachsten Fall erfolgt die Herstellung als einkomponentige erfindungsgemäße Silikonkautschukzusammensetzung durch gleichmäßiges Vermischen aller Komponenten.

Die erfindungsgemäßen Silikonkautschukzusammensetzungen werden zur Herstellung elastomerer Formkörper mittels ballistischer generativer DOD-Verfahren (3D-Druck) verwendet.

Ein weiterer Gegenstand der vorliegenden Erfindung ist daher ein Verfahren zur Herstellung von elastomeren Formkörpern, dadurch gekennzeichnet, dass die Formkörper aus den erfindungsgemäßen Siliconkautschukzusammensetzungen mittels ballistischen generativen DOD-Verfahren (3D-Druck) aufgebaut werden.

Rheologische Messmethode zur Bestimmung des nominellen Konsistenzindex K, der Viskositäten $\eta_1$ und $\eta_2$ sowie des nominellen Fließindex n der Siliconkautschukzusammensetzung

Alle Messungen wurden auf einem Rheometer MCR 302 mit Luftlagerung der Firma Anton Paar bei 25°C, sofern nicht anders genannt, gemäß DIN EN ISO 3219 durchgeführt. Es wurde mit Platte-Platte-Geometrie (Durchmesser 25 mm) bei einer Spaltweite von 300 $\mu$m gemessen. Überschüssiges Probenmaterial wurde nach Anfahren des Messspaltes mittels Holzspatel entfernt (s.g. trimmen).

Vor dem Start des eigentlichen Messprofils wurde die Probe einer definierten Vorscherung unterworfen, um die rheologische Historie aus Probenauftrag und Anfahren der Messposition zu beseitigen. Diese Vorscherung (Messphase 1) umfasst eine Scherphase von 60 s bei einer Scherrate von $v_1 = 0{,}5$ s$^{-1}$, wobei sich sehr schnell ein konstant bleibender Viskositätswert einstellt. Dieser sich am Ende der Messphase 1 einstellende Viskositätswert wird mit $\eta_1$ bezeichnet. Unmittelbar anschließend erfolgt eine 60 s währende starke Scherung bei einer Scherrate von $v_2 = 25$ s$^{-1}$ (Messphase 2), wodurch die Viskosität infolge des scherverdünnenden Verhaltens schlagartig auf einen deutlich niedrigeren, konstant bleibenden Wert abfällt. Der sich dabei am Ende der Messphase 2 einstellende Viskositätswert wird mit $\eta_2$ bezeichnet.

Durch einsetzen dieser zwei Wertepaare ($v_1;\eta_1$) und ($v_2;\eta_2$) in Formel (X) werden die beiden Unbekannten K (Konsistenzindex) und n (Fließindex) berechnet (zwei Gleichungen mit zwei Unbekannten):

$$\log \eta = \log K + n * \log v \qquad (X)$$

Viskositätsbestimmung

Die Viskositäten wurden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen.

**Beispiele**

Die folgenden Beispiele dienen der Erläuterung der Erfindung ohne diese zu beschränken.

Rheologische Messmethode

Sie erfolgte in den Beispielen analog wie oben beschrieben.

Konditionierung der Siliconkautschukzusammensetzungen

Die für den DOD-3D-Druck verwendeten Siliconkautschukzusammensetzungen wurden sämtlich vor der Verarbeitung entflüchtigt, indem 100 g der Masse in einer offenen PE-Dose in einem Exsikkator 3h bei einem Vakuum von 10 mbar und Raumtemperatur gelagert wurden. Anschließend wurde die Masse in eine 30ml-Kartusche mit Bajonettverschluss luftfrei abgefüllt und mit einem passenden Auspress-Stempel (Kunststoffkolben) verschlossen.

Die Luerlock Kartusche wurde dann in die vertikale Kartuschenhalterung des Vermes-Dosierventils flüssigkeitsdicht mit der Luerlock-Verschraubung nach unten eingeschraubt und der Druck-Stempel an der Kartuschenoberseite mit 3-8 bar Druckluft beaufschlagt; der in der Kartusche befindliche Auspress-Stempel verhindert, dass die Druckluft in die zuvor evakuierte Siliconkautschukzusammensetzung gelangen kann.

Alle UV-empfindlichen Silicon-Massen wurden unter Gelblicht (unter Ausschluss von Licht unterhalb 700 nm) hergestellt, analog entflüchtigt und in lichtundurchlässige 30 ml Kartuschen mit Luerlock-Bajonettverschluss abgefüllt.

Um zu verhindern, dass die Siliconmassen beim Lagern Luft aufnehmen, wurden die Kartuschengebinde mit Alu-kaschierten PE-Inlinern mit einem Vakuumschweißgerät der Fa. Landig + Lava GmbH & Co. KG, Valentinstraße 35 - 1,D-88348 Bad Saulgau, unter Vakuum verpackt.

Verwendete Rohstoffe und Siliconkautschukzusammensetzungen

Vinyl-funktionelle Polyorganosiloxane gemäß Bestandteil (A):

A1: Vinyldimethylsiloxy-endständiges Polydimethylsiloxan mit einer Viskosität von 20.000 cSt., erhältlich bei ABCR GmbH, Karlsruhe, Deutschland unter der Produktbezeichnung "Poly(dimethylsiloxane), vinyldimethylsiloxy terminated; viscosity 20000 cSt.", Best.-Nr. AB128873, CAS [68083-19-2] (ABCR-Katalog).

A2: Vinyldimethylsiloxy-endständiges Polydimethylsiloxan mit einer Viskosität von 500.000 cSt.; CAS-Nr. [68083-19-2].

A3: Vinyldimethylsiloxy-endständiges Trifluorpropylmethyldimethylsiloxan Copolymer mit einer Viskosität von 14 Pa.s und einem Trifluorpropylmethylsiloxy-Gehalt von 42 Mol.-%, erhältlich bei ABCR GmbH, Karlsruhe, Deutschland unter der Bezeichnung FMV-4031.

A4: Vinyldimethylsiloxy-endständiges Polydimethylsiloxan mit einer Viskosität von 200 cSt., erhältlich bei ABCR GmbH, Karlsruhe, Deutschland unter der Produktbezeichnung DMS-V22, CAS [68083-19-2] (ABCR-Katalog).

A5: Vinyldimethylsiloxy-endständiges Polydimethylsiloxan mit einer Viskosität von 1.000 cSt., erhältlich bei ABCR GmbH, Karlsruhe, Deutschland unter der Produktbezeichnung DMS-V31, CAS [68083-19-2] (ABCR-Katalog).

SiH-funktionelle Vernetzer gemäß Bestandteil (B):

B1: Methylhydrosiloxan-Dimethylsiloxan-Copolymer mit einem Molekulargewicht von Mn = 1.900-2.000 g/mol und einem Methylhydrogensiloxy-Gehalt von 25-30 Mol-%, erhältlich bei Gelest, Inc. (65933 Frankfurt am Main, Deutschland) unter der Produktbezeichnung HMS-301.

B2: SiH-terminiertes Polydimethylsiloxan, CAS: 70900-21-9, erhältlich bei ABCR GmbH, 76187 Karlsruhe, Deutschland, unter der Bezeichnung DMS-H31, Viskosität 1.000 cSt.

B3: SiH-terminiertes Polydimethylsiloxan, CAS: 70900-21-9, erhältlich bei ABCR GmbH, 76187 Karlsruhe, Deutschland, unter der Bezeichnung DMS-H21, Viskosität 100 cSt.

B4: Trimethylsiloxy-endständiges Methylhydro-dimethyltrifluorpropylmethyl-siloxan Copolymer mit einer Viskosität von 170 mPa.s, einem Si-gebundenen H-Gehalt von 0,59 Gew.-% und einem Trifluorpropylmethylsiloxy-Gehalt von 15 Mol.-%.

Hydrosilylierungskatalysator gemäß Bestandteil (C):

C1: UV-aktivierbarer Platinkatalysator: Trimethyl-(methylcyclopentadienyl)-platin(IV), erhältlich bei Sigma-Aldrich®, Taufkirchen, Deutschland.

Verstärkungsmittel gemäß Bestandteil (D):

D1: Eine hydrophobierte pyrogene Kieselsäure mit einer BET-Oberfläche von 300 m$^2$/g und einem Kohlenstoffgehalt von 4,3 Gew.-% wurde hergestellt analog der Patentschrift DE 38 39 900 A1 durch Hydrophobierung mittels Hexamethyldisilazan aus einer hydrophilen pyrogenen Kieselsäure Wacker HDK® T-30 (erhältlich bei WACKER CHEMIE AG, München, Deutschland).

D2: Eine hydrophobierte pyrogene Kieselsäure mit einer BET-Oberfläche von 300 m$^2$/g und einem Kohlenstoffgehalt von 4,7 Gew.-% und einem Vinylgehalt von 0,2 Gew.-% wurde hergestellt analog der Patentschrift DE 38 39 900 A1 durch Hydrophobierung mittels eines Gemisches von Hexamethyldisilazan und 1,3-Divinyltetramethyldisilazan aus einer hydrophilen pyrogenen Kieselsäure Wacker HDK® T-30 (erhältlich bei WACKER CHEMIE AG, München, Deutschland).

Optionaler Bestandteil (E)

E1: Stabilisator (Inhibitor) 1-Ethinylcyclohexanol; 99%, CAS-Nr. 78-27-3, ≥99%, erhältlich bei ABCR GmbH, 76187 Karlsruhe, Deutschland
E2: Weichmacher, Trimethylsiloxy-terminiertes Polydimethylsiloxan, CAS-Nr. 9016-00-6, erhältlich bei ABCR GmbH, 76187 Karlsruhe, Deutschland, unter der Bezeichnung DMS-T43, Viskosität 30.000 cSt.
E3: Thixotropierungsmittel: Epoxidiertes Leinöl, CAS-Nr. 67746-08-1, "Edenol B 316 Spezial"; Fa. Emery Oleochemicals GmbH, Henkelstr. 67, 40589 Düsseldorf.

Erfindungsgemäße sowie nicht erfindungsgemäße Beispiele 1-15:

Die Herstellung der in Tabelle 1, 2 und 3 aufgeführten Siliconkautschukzusammensetzungen erfolgte, indem in einem ersten Schritt Bestandteil (A) und Bestandteil (D) wie nachfolgend beschrieben in den in Tabelle 1, 2 bzw. 3 angegebenen Gewichtsverhältnissen innig vermischt wurden. Hierzu wurden 60 Gew.-% der Gesamtmasse des Bestandteils (A) in Form von 255 g in einem Doppel-Z-Kneter bei einer Temperatur von 25°C vorgelegt und der Kneter auf 70°C temperiert. Nach Erreichen der 70°C wurde die sich aus den in Tabelle 1, 2 bzw. 3 angegebenen Gewichtsverhältnissen entsprechende Gesamtmenge an Bestandteil (D), also die als Edukt D1 bzw. D2 beschriebene hydrophobe pyrogene Kieselsäure, portionsweise unter fortwährendem Kneten während 1 Stunde zudosiert, eingeknetet und die Masse homogenisiert. Anschließend wurde die entstandene relativ hochviskose Masse während 1 Stunde bei 150°C unter Ölpumpenvakuum (<100hPa) geknetet und entflüchtigt. Nach dieser Ausheizphase wird das Vakuum gebrochen und die Temperierung auf Raumtemperatur gestellt. Nun werden die restlichen 40 Gew.-% der Gesamtmasse des Bestandteils (A), also 170 g, eingemischt und die Masse während einer Stunde bei Raumtemperatur homogenisiert.
Die weitere Herstellung der Siliconkautschukmassen erfolgte (unter Gelblicht bzw. Lichtausschluss) durch inniges Vermischen der nach voranstehend beschriebenem Verfahren hergestellten Mischung aus (A) und (D) mit den übrigen Bestandteilen (B), (E) und (C) in Speedmixer®-Mischbechern mit Schraubverschluss der Fa. Hauschild & Co. KG, Waterkamp 1, 59075 Hamm. Dazu wurden die Komponenten nacheinander in den entsprechenden Mischbecher eingewogen und manuell gemischt. Anschließend wurde der mit einem passenden Schraubdeckel verschlossene Becher in einem Vakuum-Speedmixer® DAC 400.2 VAC-P der Fa. Hauschild & Co. KG, Waterkamp 1, 59075 Hamm mindestens 5 Minuten lang bei 1500 UMin$^{-1}$ unter einem Vakuum von 100 mbar gemischt und entgast.
In den Schraubdeckel wurde vor dem Vakuum-Mischvorgang im Vakuum-Speedmixer® ein kleines Loch gebohrt, um die Luft aus dem Mischbecher entweichen zu lassen.
Anschließend wurde die Masse aus dem Mischbecher in eine lichtdichte 30 ml-Luerlock-Kartusche luftfrei abgefüllt (mit Hilfe eines Abfüllsystems der Fa. Hauschild, bestehend aus einer passenden Speed-Disc und einer Hebelpresse). Anschließend wurde die Kartusche mit einem passenden Auspress-Stempel (Kunststoffkolben) verschlossen.
Die Zusammensetzungen der erfindungsgemäßen und nicht erfindungsgemäßen Siliconkautschukzusammensetzungen sind in Tabelle 1 bis 3 angegeben.

**Tabelle 1 (alle Angaben in Gew.-% außer C1 in Gew.-ppm bezogen auf Pt-Metall):**

| Bestandteil | Bsp.1*) | Bsp.2 | Bsp.3*) | Bsp.4 | Bsp.5*) | Bsp.6 |
|---|---|---|---|---|---|---|
| A1 | 52,2 | 52,2 | 66,6 | 66,6 | 44,7 | 44,7 |
| A2 | 21,7 | 21,7 | - | - | - | - |
| B1 | 0,9 | 0,9 | 1,0 | 1,0 | 1,9 | 1,9 |
| B2 | - | - | 7,7 | 7,7 | - | - |
| B3 | 2,9 | 2,9 | - | - | - | - |
| C1 | 25 | 25 | 25 | 25 | 25 | 25 |
| D1 | 22,4 | 22,4 | 24,8 | 24,8 | 19,1 | 19,1 |
| E1 | 0,0025 | 0,0025 | 0,0025 | 0,0025 | 0,0025 | 0,0025 |
| E2 | - | - | - | - | 34,2 | 34,2 |

(fortgesetzt)

| Bestandteil | Bsp.1*) | Bsp.2 | Bsp.3*) | Bsp.4 | Bsp.5*) | Bsp.6 |
|---|---|---|---|---|---|---|
| E3 | - | 0,05 | - | 0,05 | - | 0,05 |
| Ausgangsviskosität $\eta_1$ (bei 25°C; $v_1 = 0{,}5\ s^{-1}$) | | | | | | |
| $\eta_1$ [Pa.s] | 448 | 1.060 | 510 | 877 | 351 | 428 |
| Endviskosität $\eta_2$ (bei 25°C; $v_2 = 25\ s^{-1}$) | | | | | | |
| $\eta_2$ [Pa.s] | 110 | 129 | 152 | 151 | 167 | 67 |
| Nomineller Fließindex n | | | | | | |
| n [-] | -0,36 | -0,54 | -0,31 | -0,45 | -0,19 | -0,47 |
| Nomineller Konsistenzindex K | | | | | | |
| K [Pa.s$^n$] | 349 | 729 | 412 | 643 | 308 | 304 |
| *) nicht erfindungsgemäß | | | | | | |

Aus Tabelle 1 ist zu entnehmen, dass in den nicht erfindungsgemäßen Beispielen 1, 3 und 5 das scherverdünnende Verhalten zu gering ausgeprägt ist, so dass sich ein nomineller Fließindex von über -0,4 ergibt. Durch Einsatz des Thixotropierungsmittels E3, welches die Oberflächenenergie des Füllstoffs D1 erhöht, lässt sich dieses Problem beheben und ein Fließindex im beanspruchten Bereich einstellen (vgl. erfindungsgemäße Beispiele 2, 4 und 6).

**Tabelle 2 (alle Angaben in Gew.-% außer C1 in Gew.-ppm bezogen auf Pt-Metall):**

| Bestandteil | Bsp.7 | Bsp.8 | Bsp.9 | Bsp.10 | Bsp.11 |
|---|---|---|---|---|---|
| A1 | - | - | 66,5 | 62,4 | 64,9 |
| A3 | 72,0 | 70,0 | - | - | - |
| B1 | - | - | 3,5 | 4,6 | 4,1 |
| B4 | 3,0 | 3,0 | - | - | - |
| C1 | 25 | 25 | 25 | 25 | 25 |
| D1 | 25 | 27 | 20 | - | - |
| D2 | - | - | 10 | 33 | 31 |
| E1 | 0,0025 | 0,0025 | 0,0025 | 0,0025 | 0,0025 |
| E3 | - | - | - | - | - |
| Ausgangsviskosität $\eta_1$ (bei 25°C; $v_1 = 0{,}5\ s^{-1}$) | | | | | |
| $\eta_1$ [Pa.s] | 3.410 | 4.095 | 1.780 | 3.930 | 2.570 |
| Endviskosität $\eta_2$ (bei 25°C; $v_2 = 25\ s^{-1}$) | | | | | |
| $\eta_2$ [Pa.s] | 265 | 307 | 230 | 372 | 254 |
| Nomineller Fließindex n | | | | | |
| n [-] | -0,65 | -0,66 | -0,52 | -0,60 | -0,59 |
| Nomineller Konsistenzindex K | | | | | |
| K [Pa.s$^n$] | 2.173 | 2.592 | 1.239 | 2.589 | 1.706 |
| *) nicht erfindungsgemäß | | | | | |

**Tabelle 3 (alle Angaben in Gew.-% außer C1 in Gew.-ppm bezogen auf Pt-Metall):**

| Bestandteil | Bsp.12*) | Bsp.13*) | Bsp.14* | Bsp.15*) |
|---|---|---|---|---|
| A1 | 16,2 | 16,2 | 31,7 | 31,7 |
| A2 | 48,6 | 48,6 | 48,6 | 48,6 |
| A4 | 18,3 | 18,3 | - | - |
| A5 | 4,9 | 4,9 | - | - |
| B1 | 3,9 | 3,9 | 3,9 | 3,9 |
| C1 | 25 | 25 | 25 | 25 |
| D1 | 8,1 | 8,1 | 15,8 | 15,8 |
| E1 | 0,0025 | 0,0025 | 0,0025 | 0,0025 |
| E3 | - | 0,05 | - | 0,05 |
| Ausgangsviskosität $\eta_1$ (bei 25°C; $v_1 = 0,5$ s$^{-1}$) | | | | |
| $\eta_1$ [Pa.s] | 99 | 126 | 311 | 354 |
| Endviskosität $\eta_2$ (bei 25°C; $v_2 = 25$ s$^{-1}$) | | | | |
| $\eta_2$ [Pa.s] | 78 | 79 | 131 | 136 |
| Nomineller Fließindex n | | | | |
| n [-] | -0,06 | -0,12 | -0,22 | -0,24 |
| Nomineller Konsistenzindex K | | | | |
| K [Pa.s$^n$] | 95 | 117 | 267 | 299 |
| *) nicht erfindungsgemäß | | | | |

Aus den Tabellen 2 und 3 ist zu entnehmen, dass in den nicht erfindungsgemäßen Beispielen 12 bis 15 das scherverdünnende Verhalten zu gering ausgeprägt ist, so dass sich ein nomineller Fließindex von über -0,4 ergibt. Durch Erhöhung der Füllstoffkonzentration lässt sich dieses Problem beheben und ein Fließindex im beanspruchten Bereich einstellen (vgl. erfindungsgemäße Beispiele 7 bis 11 in Tabelle 2). Die Erhöhung der Füllstoffkonzentration führt gleichzeitig dazu, dass die Viskosität $\eta_1$ in den beanspruchten Bereich angehoben wird.

DOD-3D-Drucker:

Die hergestellten Siliconkautschukzusammensetzungen wurden im DOD-Verfahren in einer Fertigungsanlage "NEO-3D-Drucker" der Firma "German RepRap GmbH" zu Siliconelastomerteilen verarbeitet. Hierfür wurde der o.g. 3D-Drucker umgebaut und angepasst. Die ursprünglich im "NEO-3D-Drucker" montierte Thermoplast-Filament-Dosiereinheit wurde durch eine Jetting-Düse der Firma "Vermes Microdispensing GmbH, Otterfing" ersetzt, um höherviskose bis standfest-pastöse Massen wie die erfindungsgemäßen Siliconkautschukzusammensetzungen im DOD-Verfahren abscheiden zu können.

Da der "NEO"-Drucker für die Installation von Jetting-Düsen nicht standardmäßig ausgerüstet war, wurde er modifiziert. Die Vermes-Jetting-Düse wurde so in die Drucker-Steuerung eingebunden, dass das Start-Stopp-Signal (Triggersignal) der Vermes-Jetting-Düse von der G-Code-Steuerung des Druckers betätigt wurde. Dazu wurde in der G-Code-Steuerung ein spezielles Signal hinterlegt. Die G-Code-Steuerung des Computers schaltete damit lediglich die Jetting-Düse ein und aus (Start und Stopp der Dosierung).
Für die Signalübertragung des Start-Stopp-Signals wurde das Heizkabel der ursprünglich installierten Filament-Heizdüse des "NEO"-Druckers getrennt und über ein Relais mit der Vermes-Düse verbunden.
Die übrigen Dosierparameter (Dosier-Frequenz, Rising, Falling usw.) der Vermes-Jetting-Düse wurden mittels der MDC 3200+ Microdispensing Control Unit eingestellt.

Die Steuerung des 3D-Druckers erfolgte mittels eines Computers. Die Software-Steuerung und Steuersignal-Anbindung des 3D-Druckers (Software: "Repetier-Host") wurde dahingehend modifiziert, dass damit sowohl die Bewegung der Dosierdüse in den drei Raumrichtungen gesteuert werden konnte als auch das Signal zur Tropfenabscheidung. Die maximale Verfahrgeschwindigkeit des "NEO"-3D-Druckers beträgt 0,3 m/s.

Dosiersystem:

Als Dosiersystem für die verwendeten Siliconkautschukzusammensetzungen diente das Microdispensing-Dosiersystem "MDV 3200A" der Firma "Vermes Microdispensing GmbH", bestehend aus einem Komplettsystem mit folgenden Komponenten: a) MDV 3200 A - Düseneinheit mit einem Anschluss für Luerlock Kartuschen, welche an der Kartuschenoberseite mit 3-8 bar Druckluft (Schlauch mit Adapter) beaufschlagt wurden, b) Vermes Begleit-Düsenheizungs-System MDH-230tfl links, c) MDC 3200+ MicroDispensing Control Unit, die wiederum mit der PC-Steuerung verbunden war sowie über bewegliche Kabel mit der Düse, ermöglichte die Einstellung der Jetting Dosier-Parameter (Rising, Falling, Opentime, Needlelift, Delay, No Puls, Heater, Düse, Abstand, Voxeldurchmesser, Luft-Vordruck an der Kartusche). Es stehen Düsen mit Durchmessern von 50, 100, 150 und 200 $\mu$m zur Verfügung. Damit ließen sich feinste Tröpfchen der Siliconkautschukzusammensetzung im Nanoliter-Bereich auf jeder beliebigen xyz-Position der Arbeitsplatte bzw. der bereits vernetzten Siliconelastomerschicht punktgenau platzieren. Sofern nicht anders angegeben, wurde in dem Vermes-Ventil als Standard-Düseneinsatz eine 200 $\mu$m Düse eingebaut. Als Vorratsbehälter für die Siliconkautschukzusammensetzung dienten senkrecht stehende 30 ml Luerlock Kartuschen, die flüssigkeitsdicht an die Dispensing-Düse aufgeschraubt und mit Druckluft beaufschlagt wurden.
Die Steuerung des modifizierten "NEO"-3D-Druckes und des "Vermes"-Dosiersystems erfolgte mit einem PC und einer Open-Source-Software "Simplify 3D".

Jetting:

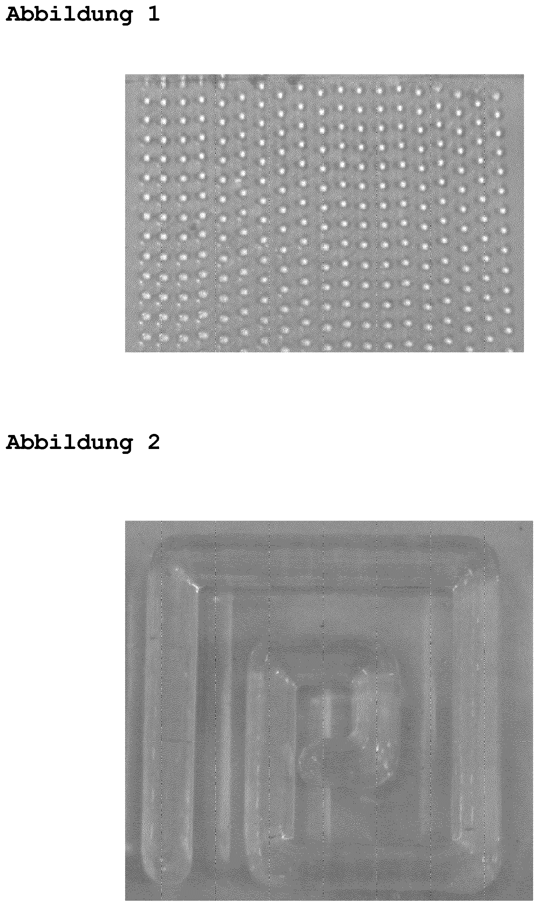

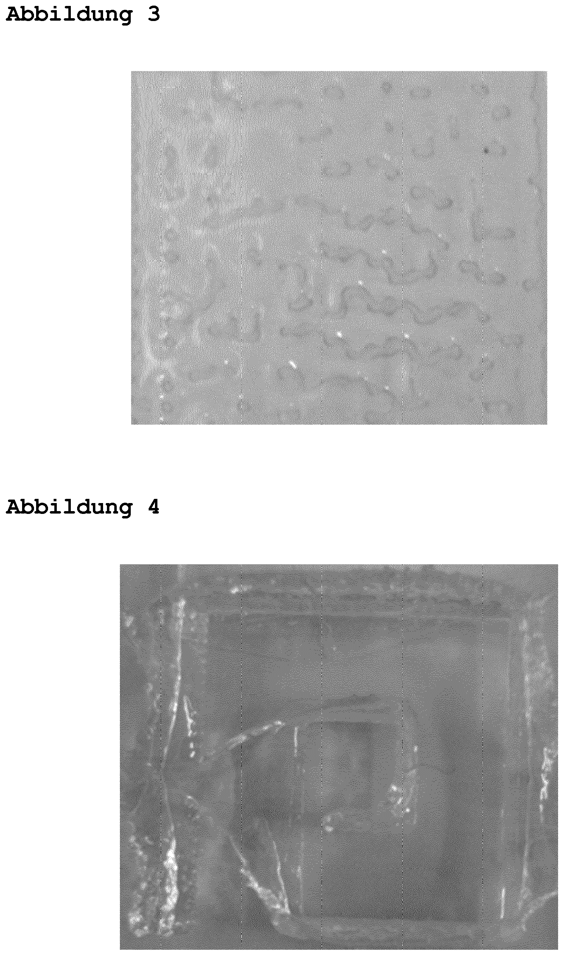

Die Siliconkautschukzusammensetzungen wurden mit den nachfolgend angegebenen Jetting-Düsenparametern auf einem Glas-Objektträger der Fläche 25 x 75 mm tröpfchenweise in Schichten der gewünschten Geometrie wiederholt abgeschieden, wobei die abgeschiedene Masse während des gesamten Druckvorgangs (ca. 50 sec) mit einem BLUEPOINT-Bestrahlungssystem mit einer Leistung von 13.200 mW/cm$^2$ kontinuierlich bestrahlt und dadurch vernetzt wurde.
Düsendurchmesser: 200 $\mu$m, Rising: 0,3 ms, Falling: 0,1 ms, Open Time: 15 ms, Needle Lift: 100%, Delay (Flächendruck): 25 ms, Delay (Einzelpunkte für Voxelgröße-Messung): 100 ms, Heizung: 45°C, Kartuschen-Vordruck: 3 bar.
Auf diese Weise wurden mit den erfindungsgemäßen Siliconkautschukzusammensetzungen transparente Siliconelastomerformteile unterschiedlicher Geometrie erhalten.
Während die in den Tabellen 1-3 aufgeführten erfindungsgemäßen hochviskosen Siliconkautschukzusammensetzungen ausnahmslos ein qualitativ hochwertiges Druckbild lieferten, führten die nichterfindungsgemäßen hochviskosen Siliconkautschukzusammensetzungen entweder zum Blockieren und Verkleben des Druckventils oder lieferten ein knörzelartiges Erscheinungsbild. Die erfindungsgemäßen Siliconkautschukzusammensetzungen weisen einen Fließindex n von kleiner -0,40 auf und ließen sich problemlos im DOD-Verfahren jetten (vgl. erfindungsgemäße Punktematrix in Abbildung 1 sowie erfindungsgemäßes spiralförmiges Siliconelastomerformteil in Abbildung 2). Das Erscheinungsbild bei Verwendung der nicht erfindungsgemäßen Massen zeigt beispielhaft Abbildung 3 für die gedruckte Punktematrix bzw. Abbildung 4 für das spiralförmige Siliconelastomerformteil.

**Patentansprüche**

1. Hochviskose Siliconkautschukzusammensetzung für den 3D-Druck von Siliconformteilen im ballistischen generativen DOD-Verfahren mit einer Viskosität $\eta_1$ (jeweils bei 25°C und 0,5 s$^{-1}$) im Bereich von 300 Pa·s bis 10 kPa·s, enthaltend

   (A) 50 bis 95 Gew.-% mindestens einer Organosiliciumverbindung mit durchschnittlich mindestens zwei aliphatisch ungesättigten Gruppen pro Molekül,
   (B) 1 bis 10 Gew.-% mindestens einer Organosiliciumverbindung mit durchschnittlich mindestens zwei SiH-Gruppen pro Molekül,
   oder zusätzlich zu (A) und (B)
   (G) 0-95 Gew.-% mindestens einer Organosiliciumverbindung mit durchschnittlich mindestens zwei aliphatisch ungesättigten Gruppen und mindestens zwei SiH-Gruppen pro Molekül,
   oder anstelle von (A)+(B)
   (G) 50-95 Gew.-% mindestens eine Organosiliciumverbindung mit mindestens zwei aliphatisch ungesättigten Gruppen und mindestens zwei SiH-Gruppen pro Molekül,
   (C) 0,1 bis 500 Gew.-ppm mindestens eines Hydrosilylierungskatalysators bezogen auf den Gehalt des Metalls zur gesamten Siliconzusammensetzung,
   (D) 10 bis 50 Gew.-% mindestens eines verstärkenden Materials, wobei die Komponente (D) aus der Gruppe bestehend aus (D1) pyrogen erzeugten Kieselsäuren, Titandioxide, Aluminiumoxide, Aerogele und Ruße mit einer hohen spezifischen Oberfläche zwischen 50 und 1000 $m^2$/g, gemessen nach der BET-Methode nach DIN 66131 und DIN 66132, und (D2) Nanopartikeln bestehend aus $SiO_2$, $TiO_2$, exfolierte Schichtsilikate oder Kohlenstoffnanoröhren ausgewählt ist,

(E) 0 bis 30 Gew.-% Hilfsstoffe, die sich von den anderen Bestandteilen der Zusammensetzung unterscheiden, wobei die Komponente (E) aus der Gruppe bestehend aus Inhibitoren, Hitzestabilisatoren, Lösungsmitteln, Weichmachern, Farbpigmenten, Sensibilisatoren, Photoinitiatoren, Haftvermittlern, nicht-verstärkenden Füllstoffen, Thixotropiermitteln, Leitfähigkeitsadditiven und Siliconharzen ausgewählt wird,

**dadurch gekennzeichnet, dass** der nominelle Fließindex n der Siliconkautschukzusammensetzung im folgenden Bereich liegt:

$$-1,00 < n < -0,40,$$

wobei sich n aus Formel (X) ergibt:

$$\log \eta = \log K + n * \log v, \qquad (X)$$

wobei

$\eta$ die Viskosität bei der Scherrate v,
K den nominellen Konsistenzindex,
v die Scherrate und
log den dekadischen Logarithmus darstellt,

und die Bestimmung der Viskosität $\eta_1$, des nominellen Fließindex n sowie des nominellen Konsistenzindex K nach Formel (X) gemäß der in der Beschreibung offenbarten Rheologischen Messmethode erfolgt.

2. Siliconkautschukzusammensetzung gemäß Anspruch 1, **dadurch gekennzeichnet, dass** der Fließindex n der Siliconkautschukzusammensetzung im folgenden Bereich liegt:

$$-0,80 < n < -0,45.$$

3. Siliconkautschukzusammensetzung gemäß Anspruch 1 oder 2, **dadurch gekennzeichnet, dass** der Fließindex n der Siliconkautschukzusammensetzung im folgenden Bereich liegt:

$$-0,70 < n < -0,50.$$

4. Siliconkautschukzusammensetzung gemäß einem der Ansprüche 1 bis 3, **dadurch gekennzeichnet, dass** ihre Viskosität $\eta_1$ (jeweils bei 25°C und 0,5 $s^{-1}$) im Bereich von 400 Pa·s bis 5 kPa·s liegt.

5. Siliconkautschukzusammensetzung gemäß einem der Ansprüche 1 bis 4, **dadurch gekennzeichnet, dass** ihre Viskosität $\eta_1$ (jeweils bei 25°C und 0,5 $s^{-1}$) im Bereich von 500 Pa·s bis 3 kPa·s liegt.

6. Siliconkautschukzusammensetzung gemäß einem der Ansprüche 1 bis 5, **dadurch gekennzeichnet, dass** die Komponente (D) ausgewählt wird aus (D1) pyrogen erzeugten Kieselsäuren, Titandioxide, Aluminiumoxide, Aerogele und Ruße mit einer hohen spezifischen Oberfläche zwischen 50 und 1000 $m^2$/g, gemessen nach der BET-Methode nach DIN 66131 und DIN 66132.

7. Siliconkautschukzusammensetzung gemäß einem der Ansprüche 1 bis 6, **dadurch gekennzeichnet, dass** als Komponente (D) ausschließlich ausgewählt wird aus (D1) pyrogen erzeugten Kieselsäuren.

8. Siliconkautschukzusammensetzung gemäß einem der Ansprüche 1 bis 7, **dadurch gekennzeichnet, dass** der Hydrosilylierungskatalysator (C) eine durch UV- oder UV-VIS-Strahlung aktivierbarer Platinkatalysator ist.

9. Verfahren zur Herstellung von elastomeren Formkörpern, **dadurch gekennzeichnet, dass** die Formkörper aus den erfindungsgemäßen Silikonkautschukzusammensetzungen gemäß den Ansprüchen 1 bis 8 mittels ballistischen generativen DOD-Verfahren (3D-Druck) aufgebaut werden.

10. Verwendung der Siliconkautschukzusammensetzung gemäß einer der Ansprüchen 1 bis 8 zur Herstellung von elastomeren Formkörpern mittels ballistischer generativer DOD-Verfahren (3D-Druck).

**Claims**

1. High-viscosity silicone rubber composition for the 3D printing of silicone components in the ballistic additive DOD method having a viscosity $\eta_1$ (in each case at 25°C and 0.5 s$^{-1}$) in the range from 300 Pa·s to 10 kPa·s, comprising:

   (A) 50% to 95% by weight of at least one organosilicon compound having an average of at least two aliphatically unsaturated groups per molecule,
   (B) 1% to 10% by weight of at least one organosilicon compound having an average of at least two SiH groups per molecule,
   or, in addition to (A) and (B),
   (G) 0%-95% by weight of at least one organosilicon compound having an average of at least two aliphatically unsaturated groups and at least two SiH groups per molecule,
   or, in place of (A)+(B),
   (G) 50%-95% by weight of at least one organosilicon compound having at least two aliphatically unsaturated groups and at least two SiH groups per molecule,
   (C) 0.1 to 500 ppm by weight of at least one hydrosilylation catalyst, based on the content of the metal relative to the overall silicone composition,
   (D) 10% to 50% by weight of at least one reinforcing material, where component (D) is selected from the group consisting of (D1) fumed silicas, titanium dioxides, aluminum oxides, aerogels and carbon blacks having a high specific surface area between 50 and 1000 m$^2$/g, measured by the BET method to DIN 66131 and DIN 66132, and (D2) nanoparticles consisting of SiO2, TiO2, exfoliated sheet silicates or carbon nanotubes,
   (E) 0% to 30% by weight of auxiliaries other than the other constituents of the composition, where component (E) is selected from the group consisting of inhibitors, heat stabilizers, solvents, plasticizers, color pigments, sensitizers, photoinitiators, adhesion promoters, non-reinforcing fillers, thixotropic agents, conductivity additives and silicone resins,

   **characterized in that** the nominal melt flow index n of the silicone rubber composition is within the following range:

$$-1.00 < n < -0.40,$$

   where n is calculated from formula (X):

$$\log \eta = \log K + n * \log v \qquad (X)$$

   where

   $\eta$ represents the viscosity at shear rate v,
   K represents the nominal consistency index,
   v represents the shear rate and
   log represents the decadic logarithm,

   and the viscosity $\eta_1$, the nominal melt flow index n and the nominal consistency index K in formula (X) are determined by the rheological test method disclosed in the description.

2. Silicone rubber composition according to Claim 1, **characterized in that** the melt flow index n of the silicone rubber composition is within the following range:

$$-0.80 < n < -0.45.$$

3. Silicone rubber composition according to Claim 1 or 2, **characterized in that** the melt flow index n of the silicone rubber composition is within the following range:

$$-0.70 < n < -0.50.$$

4. Silicone rubber composition according to any of Claims 1 to 3, **characterized in that** the viscosity $\eta_1$ thereof (in each case at 25°C and 0.5 s$^{-1}$) is in the range from 400 Pa·s to 5 kPa·s.

5. Silicone rubber composition according to any of Claims 1 to 4, **characterized in that** the viscosity $\eta_1$ thereof (in each case at 25°C and 0.5 s$^{-1}$) is in the range from 500 Pa·s to 3 kPa·s.

6. Silicone rubber composition according to any of Claims 1 to 5, **characterized in that** component (D) is selected from (D1) fumed silicas, titanium dioxides, aluminum oxides, aerogels and carbon blacks having a high specific surface area between 50 and 1000 m$^2$/g, measured by the BET method according to DIN 66131 and DIN 66132.

7. Silicone rubber composition according to any of Claims 1 to 6, **characterized in that** component (D) is selected exclusively from (D1) fumed silicas.

8. Silicone rubber composition according to any of Claims 1 to 7, **characterized in that** the hydrosilylation catalyst (C) is a platinum catalyst activatable by UV or UV-VIS radiation.

9. Process for producing elastomeric shaped bodies, **characterized in that** the shaped bodies are formed from the inventive silicone rubber compositions according to Claims 1 to 8 by means of ballistic additive DOD methods (3D printing).

10. Use of the silicone rubber composition according to any of Claims 1 to 8 for production of elastomeric shaped bodies by means of ballistic additive DOD methods (3D printing).

**Revendications**

1. Composition de caoutchouc de silicone hautement visqueuse pour l'impression 3D de pièces moulées en silicone dans le procédé DOD additif balistique, ayant une viscosité $\eta_1$ (à chaque fois à 25 °C et 0,5 s$^{-1}$) dans la plage allant de 300 Pa·s à 10 kPa·s,
contenant :

(A) 50 à 95 % en poids d'au moins un composé d'organosilicium contenant en moyenne au moins deux groupes aliphatiquement insaturés par molécule,
(B) 1 à 10 % en poids d'au moins un composé d'organosilicium contenant en moyenne au moins deux groupes SiH par molécule,
ou en plus de (A) et (B),
(G) 0 à 95 % en poids d'au moins un composé d'organosilicium contenant en moyenne au moins deux groupes aliphatiquement insaturés et au moins deux groupes SiH par molécule,
ou à la place de (A) + (B),
(G) 50 à 95 % en poids d'au moins un composé d'organosilicium contenant au moins deux groupes aliphatiquement insaturés et au moins deux groupes SiH par molécule,
(C) 0,1 à 500 ppm en poids d'au moins un catalyseur d'hydrosilylation en termes de teneur du métal par rapport à la composition de silicone totale,
(D) 10 à 50 % en poids d'au moins un matériau renforçant, le composant (D) étant choisi dans le groupe constitué par (D1) les silices pyrogénées, les dioxydes de titane, les oxydes d'aluminium, les aérogels et les noirs de carbone ayant une surface spécifique élevée comprise entre 50 et 1 000 m$^2$/g, mesurée selon la méthode BET selon DIN 66131 et DIN 66132, et (D2) les nanoparticules constituées par SiO$_2$, TiO$_2$, des phyllosilicates exfoliés ou des nanotubes de carbone,
(E) 0 à 30 % en poids d'adjuvants qui diffèrent des autres constituants de la composition, le composant (E) étant choisi dans le groupe constitué par les inhibiteurs, les stabilisateurs thermiques, les solvants, les plastifiants, les pigments colorés, les sensibilisateurs, les photoinitiateurs, les promoteurs d'adhésion, les charges non renforçantes, les agents thixotropiques, les additifs de conductivité et les résines de silicone,

**caractérisée en ce que** l'indice de fluidité nominal n de la composition de caoutchouc de silicone se situe dans la plage suivante :

$$-1,00 < n < -0,40,$$

n étant donné par la formule (X) :

$$\log \eta = \log K + n * \log v \qquad (X)$$

dans laquelle

$\eta$ est la viscosité au taux de cisaillement v,
K est l'indice de consistance nominal,
v est le taux de cisaillement et
log désigne le logarithme décadien,

et la détermination de la viscosité $\eta_1$, de l'indice de fluidité nominal n et de l'indice de consistance nominal K selon la formule (X) ayant lieu par les méthodes de mesure rhéologiques décrites dans la description.

2. Composition de caoutchouc de silicone selon la revendication 1, **caractérisée en ce que** l'indice de fluidité n de la composition de caoutchouc de silicone se situe dans la plage suivante :

$$-0,80 < n < -0,45.$$

3. Composition de caoutchouc de silicone selon la revendication 1 ou 2, **caractérisée en ce que** l'indice de fluidité n de la composition de caoutchouc de silicone se situe dans la plage suivante :

$$-0,70 < n < -0,50.$$

4. Composition de caoutchouc de silicone selon l'une quelconque des revendications 1 à 3, **caractérisée en ce que** sa viscosité $\eta_1$ (à chaque fois à 25 °C et 0,5 s$^{-1}$) se situe dans la plage allant de 400 Pa·s à 5 kPa·s.

5. Composition de caoutchouc de silicone selon l'une quelconque des revendications 1 à 4, **caractérisée en ce que** sa viscosité $\eta_1$ (à chaque fois à 25 °C et 0,5 s$^{-1}$) se situe dans la plage allant de 500 Pa·s à 3 kPa·s.

6. Composition de caoutchouc de silicone selon l'une quelconque des revendications 1 à 5, **caractérisée en ce que** le composant (D) est choisi parmi (D1) les silices pyrogénées, les dioxydes de titane, les oxydes d'aluminium, les aérogels et les noirs de carbone ayant une surface spécifique élevée comprise entre 50 et 1 000 m$^2$/g, mesurée selon la méthode BET selon DIN 66131 et DIN 66132.

7. Composition de caoutchouc de silicone selon l'une quelconque des revendications 1 à 6, **caractérisée en ce que** le composant (D) est choisi exclusivement parmi (D1) les silices pyrogénées.

8. Composition de caoutchouc de silicone selon l'une quelconque des revendications 1 à 7, **caractérisée en ce que** le catalyseur d'hydrosilylation (C) est un catalyseur de platine activable par rayonnement UV ou UV-VIS.

9. Procédé de fabrication de corps moulés élastomères, **caractérisé en ce que** les corps moulés sont formés à partir des compositions de caoutchouc de silicone selon l'invention selon les revendications 1 à 8 par des procédés DOD additifs balistiques (impression 3D).

**10.** Utilisation de la composition de caoutchouc de silicone selon l'une quelconque des revendications 1 à 8 pour la fabrication de corps moulés élastomères par des procédés DOD additifs balistiques (impression 3D).

Abbildung 1

Abbildung 2

## Abbildung 3

## Abbildung 4

**IN DER BESCHREIBUNG AUFGEFÜHRTE DOKUMENTE**

**In der Beschreibung aufgeführte Patentdokumente**

- WO 2015107333 A1
- DE 102011012412 A1
- DE 102011012480 A1
- DE 102008000156 A1
- DE 102008043316 A1
- DE 102009002231 A1
- DE 102009027486 A1
- DE 102010043149 A1
- WO 2009027133 A2
- EP 0122008 A1
- EP 0561919 B1
- EP 0398701 B1
- EP 0146307 B1
- EP 0358452 B1
- EP 0561893 B1
- EP 1050538 B1
- EP 1803728 B1
- EP 686676 B1
- EP 1433749 A1
- DE 102013226494 A1
- DE 3839900 A1

**In der Beschreibung aufgeführte Nicht-Patentliteratur**

- **A. GEBHARDT.** Generative Fertigungsverfahren. Carl Hanser Verlag, 2013
- **BRIAN DERBY.** Inkjet Printing of Functional and Structural Materials: Fluid Property Requirements, Feature Stability, and Resolution. *Annu. Rev. Mater. Res.,* 2010, vol. 40, 395-414
- **G. W. SEARS.** *Anal. Chem.,* 1956, vol. 28, 1981
- *CHEMICAL ABSTRACTS,* 68083-19-2
- *CHEMICAL ABSTRACTS,* 70900-21-9
- *CHEMICAL ABSTRACTS,* 78-27-3
- *CHEMICAL ABSTRACTS,* 9016-00-6
- *CHEMICAL ABSTRACTS,* 67746-08-1